(19) Europäisches Patentamt
European Patent Office
Office européen des brevets

(11) **EP 1 868 189 A1**

(12) **EUROPEAN PATENT APPLICATION**
published in accordance with Art. 158(3) EPC

(43) Date of publication:
**19.12.2007 Bulletin 2007/51**

(51) Int Cl.:
*G11B 7/135* (2006.01)    *G11B 7/09* (2006.01)

(21) Application number: **06729192.2**

(86) International application number:
**PCT/JP2006/305171**

(22) Date of filing: **15.03.2006**

(87) International publication number:
**WO 2006/098386 (21.09.2006 Gazette 2006/38)**

(84) Designated Contracting States:
**DE FR**

(30) Priority: **17.03.2005 JP 2005077962**
**01.11.2005 JP 2005318875**

(71) Applicant: **Sharp Kabushiki Kaisha**
**Osaka 545-8522 (JP)**

(72) Inventors:
• **OGATA, Nobuo**
**Hiroshima 739-0025 (JP)**

• **KANAZAWA, Yasunori**
**Nara 631-0846 (JP)**

(74) Representative: **Müller, Frithjof E.**
**Müller Hoffmann & Partner**
**Patentanwälte**
**Innere Wiener Strasse 17**
**81667 München (DE)**

(54) **ABERRATION DETECTOR AND OPTICAL PICKUP WITH SAME**

(57) The first polarizing hologram element (2) is divided into a first area (2a) allowing a first light beam to pass through and a second area (2b) and a third area (2c) which allow a second light beam not including the optical axis of the original light beam to pass through. The first area (2a) is circumscribed by: dividing straight lines (D2) and (D6) in parallel to a straight line (D1) which passes through the optical axis and is provided in a radial direction; a dividing straight line(D4); dividing straight lines (D3) and (D5) forming predetermined angles converging in a direction away from the dividing straight lines (D2) and (D6); a dividing straight line (D7) on the opposite side; and circular arcs (E1) and (E2) of the first polarizing hologram element (2). With this arrangement, it is possible to provide an aberration detection apparatus in which the sensitivity of an aberration error signal is high, a change in the sensitivity of the aberration error signal is small even if the centers of the light beam separation means and the light beam are deviated from one another on account of objective lens shift at the time of tracking control, and no offset occurs in the aberration error signal even if a deviation in the optical axis direction occurs between the light beam separation means and the optical detector, and to provide an optical pickup apparatus including the aberration detection apparatus.

FIG. 1

**Description**

TECHNICAL FIELD

The present invention relates to an aberration detection apparatus for detecting aberration generated in a condensing optical system, and also relates to an optical pickup apparatus.

BACKGROUND ART

Along with the increase in the volume of information, increase in the recording density of optical discs has been required. The recording density of optical discs has been increased by increasing recording density per line in an information recording layer of an optical disc or by narrowing the pitch of tracks. To achieve such increase in recording density of optical discs, it is necessary to reduce the beam diameter of an optical beam condensed on the information recording layer of the optical disc.

The reduction in the beam diameter of an optical beam is achievable by shortening the wavelength of the optical beam or increasing the numerical aperture (NA) of an objective lens which is a condensing optical system of an optical pickup apparatus by which recording and reproduction to/from an optical disc is performed.

As to the shortening of the wavelength of an optical beam, red semiconductor laser with the wavelength of 650nm, which has typically been used for DVD (Digital Versatile Disc), may be replaced with blue-violet semiconductor laser with the wavelength of 405nm.

In optical discs, the information recording layer is typically covered with cover glass, in order to protect the information recording layer from dust and scratch. Therefore an optical beam having passed through the objective lens of the optical pickup apparatus passes through the cover glass and is condensed and focused on the information recording layer below.the cover glass.

When the optical beam passes through the cover glass, spherical aberration (SA) occurs. The objective lens is typically designed to correct spherical aberration. However, spherical aberration occurs in the optical beam condensed on the information recording layer when the thickness of the cover glass does not fall within a predetermined range. The spherical aberration increases the beam diameter and hence information cannot be properly read and written.

To facilitate the increase in the density of recorded information in the thickness direction of optical disc, mutilayer optical discs formed by stacking information recording layers have already been sold as commercial products in these years.

In an optical disc in which plural information recording layers are formed, the length from the surface of the optical disc (i.e. the surface of the cover glass) to the information recording layer is different among the information recording layers. On this account, the degree of spherical aberration occurring when an optical beam passes through the cover glass of the optical disc is different among the information recording layers.

Furthermore, an objective lens having a high numerical aperture (NA) is susceptible to spherical aberration, and the accuracy of information readout is deteriorated by the spherical aberration. Therefore, to achieve the increase in the recording density while adopting a high-NA objective lens, it is necessary to correct spherical aberration.

To correct spherical aberration, for example, Japanese Laid-Open Patent Application No. 2002-157771 (published on May 31, 2002; hereinafter Patent Document 1) teaches that a returning optical light beam reflected on an optical disc and to be condensed is separated by a hologram element into a first light beam close to the optical axis of the light beam and a second light beam surrounding the first light beam, spherical aberration is detected through the use of a difference between the condensing positions of the first light beam and the second light beam, and the spherical aberration is corrected based on the detection result.

The optical pickup apparatus of Patent Document 1 will be outlined with reference to Fig. 24.

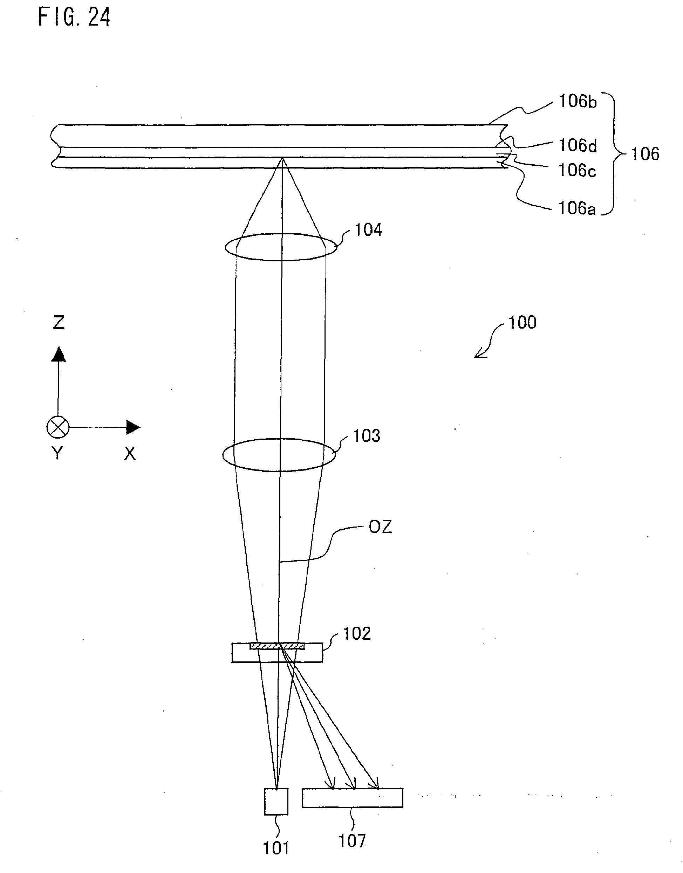

As shown in Fig. 24, in the optical pickup apparatus 100, a hologram element 102, a collimator lens 103, and an objective lens 104 are arranged on the optical axis formed between a light beam emitting surface of a semiconductor laser 101 and a light beam reflecting surface of an optical disc 106, and an optical detector 107 is provided at the focal point of light diffracted by the hologram element 102.

In this optical pickup apparatus 100, a light beam emitted from the semiconductor laser 101 passes through the hologram element 102 as zeroth-order diffracted light, and is converted to parallel light by the collimator lens 103. Then the light passed through the objective lens 104 is condensed on the information recording layer 106c or 106d of the optical disc 106.

The light beam reflected on the information recording layer 106c or 106d of the optical disc 106 passes through the objective lens 104 and the collimator lens 103 in this order and enters the hologram element 102. The light is diffracted by the hologram element 102 and condensed on the optical detector 107. The optical detector 107 is provided at the focal point of the positive first-order diffracted light traveling from the hologram element 102.

The optical disc 106 is constituted by a cover glass 106a, a substrate 106b, and two information recording layers 106c and 106d which are formed between the cover glass 106a and the substrate 106b. In short, the optical disc 106 is a two-layer disc. The optical pickup apparatus 100 therefore reproduces information from the information recording layer 106c and/or 106d and records information onto the information recording layer 106c and/or 106d, by condensing a light beam on the information recording layer 106c or 106d.

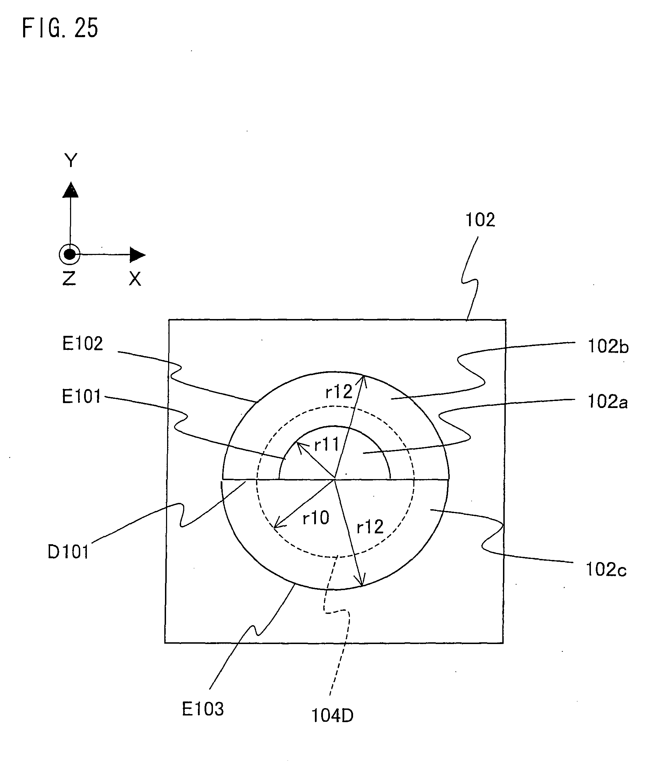

Details of the hologram element 102 will be given with reference to Fig. 25.

The hologram element 102 has three areas 102a, 102b, and 102c which constitute a circle. The first area 102a is circumscribed by a first semicircular arc E101 (r1 in radius) centered on the optical axis and a straight line D101 provided in a radial direction and including the optical axis. The second area 102b is circumscribed by the straight line D101, the first semicircular arc E101 (r1 in radius), and a second semicircular arc E102 (r2 in radius) centered on the optical axis. The third area 102c is circumscribed by the straight line D101 and a third semicircular arc E103 (r2 in radius) on the opposite side of the first semicircular arc E101 and the second semicircular arc E102 with respect to the straight line D101. Provided that the radius of the effective diameter 104D on the hologram element 102, which diameter is determined by the aperture of the objective lens 104, is indicated as r, a spherical aberration error signal is maximized when the radius r1 = 0.7r.

In the conventional optical pickup apparatus 100, if a light beam is separated by an arc (whose radius is about 70% of the optical beam effective diameter 104D determined by the aperture of the objective lens 104) centered on the optical axis, a focal point deviation between separated light beams is maximized and spherical aberration is detectable with high sensitivity.

However, the conventional optical pickup apparatus is disadvantageous in that the sensitivity of the spherical aberration detection signal is significantly lowered when the center of the light beam and the center of the light beam separation means are out of alignment on account of objective lens shift at the time of tracking control.

Furthermore, the conventional optical pickup apparatus does not take into account of how the light beam separation means is adjusted when the knife edge method is used for detecting a focal point deviation. That is to say, when the knife edge method is used, the light beam separation means is adjusted as follows: if there is an optical axis direction error between the light beam separation means and the optical detector, offset occur in the focal point deviation signal and the spherical aberration detection signal, respectively, and the light beam separation means is rotated so that the offset is cancelled. However, since the degree of adjustment of the focal point deviation signal does not agree with the degree of adjustment of the spherical aberration detection signal, the offset of the spherical aberration error detection signal remains even if the offset of the focal point deviation signal is cancelled.

Furthermore, in a case of an optical pickup apparatus which uses an optical detector having an auxiliary light receiving area for focal point deviation signal correction, offset also occurs in the focal point deviation signal.

DISCLOSURE OF INVENTION

The present invention was done to solve the above-described problem of the conventional art, and the objective of the present invention is to provide an aberration detection apparatus which can (i) sufficiently restrain a change in the sensitivity of a spherical aberration detection signal on account of objective lens shift at the time of tracking control while an absolute value (signal quality) of the sensitivity of the spherical aberration detection signal, by optimizing the shapes of divided light beams, (ii) sufficiently restrain the offsets in a focal point deviation signal and the spherical aberration detection signal by equalizing the degree of adjustment of the focal point deviation signal with the degree of adjustment of the spherical aberration detection signal, at the time of adjustment of the light beam separation means by rotation, and (iii) solve the aforesaid problem in an optical pickup apparatus adopting an optical detector having auxiliary light receiving areas, and also to provide an optical pickup apparatus including the aberration detection apparatus.

To achieve the objective above, an aberration detection apparatus of the present invention includes: light beam separation means for separating a light beam having passed through a condensing optical system into a first light beam including an optical axis of the light beam and a second light beam excluding the optical axis of the light beam; and spherical aberration detection means for detecting spherical aberration in the condensing optical system, based on focal points of the first and second light beams separated by the light beam separation means, the aberration detection apparatus being characterized in that, the light beam separation means is divided into a first area allowing the first light beam to pass through and a second area allowing the second light beam to pass through, the first area is circumscribed by: a first dividing straight line and a second dividing straight line which are provided on respective ends of a straight line which is in parallel to a straight line which passes through the optical axis and is provided in a radial direction; a third dividing straight line which is closer to the outer periphery than the first dividing straight line and the second dividing straight line and is in parallel to the first dividing straight line and the second dividing straight line; a fourth dividing straight line and a fifth dividing straight line which connect the ends of the first dividing straight line and the second dividing straight line with the third dividing straight line, respectively, are axisymmetrical with respect to a straight line which passes through the optical axis and is provided in a track direction, and form predetermined angles converging in a direction away from the first and second dividing straight lines; a sixth dividing straight line which is provided on the opposite side of the first dividing straight line and the second dividing straight line with respect to the straight line which passes through the optical axis and is provided in the radial direction, and is in parallel to the straight line which passes through the optical axis and is provided in the radial direction; and a part of the outer periphery of the light beam separation means, the part connecting the first dividing straight line with the sixth dividing straight line, and a part of the outer periphery of the light beam separation means, the part connecting the second dividing straight line with the sixth dividing straight line, and the second area is constituted by two areas provided on the both sides of the first area provided around the center of the light beam separation means.

According to the aforesaid invention, the first dividing straight line, the second dividing straight line, the third dividing straight line, and the sixth dividing straight line are provided in parallel to the radial direction. On this account, an influence of the objective lens shift is restrained and a change in the sensitivity of a spherical aberration error signal is small even if objective lens shift occurs during tracking control. It is therefore possible to always detect and correct spherical aberration with precision, even if tracking control is carried out.

Furthermore, since the fourth dividing straight line and the fifth dividing straight line symmetrically form predetermined angles converging in a direction away from the first and second dividing straight lines, a spherical aberration component obtained from this area is added, with the result that the sensitivity in the detection of the spherical aberration error signal is increased. On this account, influences of stray light occurring in the optical system of the optical pickup apparatus and unnecessary light from the information recording layer are restrained and hence the quality of the spherical aberration error signal is ensured. It is therefore possible to stably perform spherical aberration detection.

Furthermore, the sixth dividing straight line is provided on the opposite side of the first dividing straight line and the second dividing straight line with respect to the straight line which passes through the optical axis and is provided in the radial direction, and is in parallel to the straight line which passes through the optical axis and is provided in the radial direction. On this account, it is possible to reduce a deviation in the degree of adjustment between the focal point deviation signal and the spherical aberration error signal, when a deviation in the optical axis direction between the light beam separation means and the optical detector is adjusted by, for example, rotating the light beam separation means, in case where a focal point deviation signal is detected by the double knife edge method.

As a result, the offsets in the focal point deviation signal and the spherical aberration error signal, respectively are both reduced by the rotational adjustment of the light beam separation means, when a deviation in the optical direction occurs between the light beam separation means and the optical detector and the offsets occur in the focal point deviation signal and the spherical aberration error signal.

To achieve the objective above, the optical pickup apparatus of the present invention includes: a light source; a condensing optical system which condenses a light beam emitted from the light source on an optical recording medium; light beam separation means for separating the light beam having passed through the condensing optical system into a first light beam including an optical axis of the light beam and a second light beam excluding the optical axis of the light beam; spherical aberration detection means for detecting spherical aberration in the condensing optical system, based on focal points of the first and second light beams separated by the light beam separation means; and spherical aberration correction means for correcting spherical aberration detected by the spherical aberration detection means, the light beam separation means being divided into a first area allowing the first light beam to pass through and a second area allowing the second light beam to pass through, the first area being circumscribed by: a first dividing straight line and a second dividing straight line which are provided on respective ends of a straight line which is in parallel to a straight line which passes through the optical axis and is provided in a radial direction; a third dividing straight line which is closer to the outer periphery than the first dividing straight line and the second dividing straight line and is in parallel to the first dividing straight line and the second dividing straight line; a fourth dividing straight line and a fifth dividing straight line which connects the ends of the first dividing straight line and the second dividing straight line with the third dividing straight line, respectively, are axisymmetrical with respect to a straight line which passes through the optical axis and is provided in a track direction, and symmetrically form predetermined angles converging in a direction away from the first and second dividing straight lines; a sixth dividing straight line which is provided on the opposite side of the first dividing straight line and the second dividing straight line with respect to the straight line passing through the optical axis and provided in the radial direction, and is in parallel to the straight line passing through the optical axis and provided in the radial direction; and a part of the outer periphery of the light beam separation means, the part connecting the first dividing straight line with the sixth dividing straight line, and a part of the outer periphery of the light beam separation means, the part connecting the second dividing straight line with the sixth dividing straight line, the second area being constituted by two areas provided on the both sides of the first area provided around the center of the light beam separation means.

According to the invention, the light beam means is used in an optical pickup apparatus using an aberration detection apparatus in which auxiliary light receiving areas are provided so that a deviation in the degree of adjustment between the focal point deviation signal and the spherical aberration error signal is reduced at the time of adjusting a deviation in the optical axis direction between the light beam separation means and the spherical aberration detection means by performing rotational adjustment of the light beam separation means. This makes it possible to easily adjust the light beam separation means, and hence it becomes possible to provide optical pickup apparatuses with low costs.

To achieve the objective above, an aberration detection apparatus of the present invention includes: separation means for separating a light beam having passed through a condensing optical system into a first light beam including an optical axis of the light beam and a second light beam farther away from the optical axis as compared to the first light beam; and spherical aberration detection means for detecting spherical aberration in the condensing optical system, based on spots formed on detection means by the first and second light beams separated by the separation means, the aberration detection apparatus being characterized in that, the shortest distance between the optical axis and the spot formed on the detection means by the second light beam is arranged to be longer than an irradiation radius of redundant reflected light generated by a non-reproduction layer of an optical recording medium having plural information recording layers, and the spherical aberration detection means generates a spherical aberration error signal based on a signal indicating a position of a focal spot formed by the second light beam.

According to the invention above, it is possible to detect a spherical aberration error signal without being influenced by redundant reflected light generated in a non-reproduction layer of an optical recording medium (multilayer disc) having plural information recording layers, and a spherical aberration error signal is precisely detected when information is recorded onto or reproduced from a multilayer disc. It is therefore possible to provide highly-reliable aberration detection apparatus and optical pickup apparatus.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1 is a plan view related to an optical pickup apparatus of an embodiment of the present invention and shows a second polarizing hologram element in the optical pickup apparatus.

Fig. 2 is a cross section outlining the optical pickup apparatus.

Fig. 3(a) is a plan view showing an optical integration unit in the optical pickup apparatus.

Fig. 3(b) is a cross section showing the optical integration unit in the optical pickup apparatus.

Fig. 4 relates to an optical detector of the optical pickup apparatus, and shows how focal spots are formed on the optical detector when there are neither focal point deviation nor spherical aberration.

Fig. 5 is a plan view related to the optical detector of the optical pickup apparatus, and shows how focal spots are formed on the optical detector when a focal point deviation occurs while there is no spherical aberration.

Fig. 6 is a plan view related to the optical detector of the optical pickup apparatus, and shows how focal spots are formed on the optical detector when spherical aberration occurs while there is no focal point deviation.

Fig. 7(a) is a graph showing the relationship between a spherical aberration error signal and a variation in the thickness of a cover glass of an optical disc, in the optical pickup apparatus.

Fig. 7(b) is a graph showing the relationship between a spherical aberration error signal and a variation in the thickness of a cover glass of an optical disc, in a conventional optical pickup apparatus.

Fig. 8(a) is a graph showing the relationship between a spherical aberration error signal and a variation in the thickness of the cover glass of the optical disc, in the optical pickup apparatus.

Fig. 8(b) is a graph showing the relationship between a spherical aberration error signal and a variation in the thickness of the cover glass of the optical disc, in the optical pickup apparatus.

Fig. 9 is a graph showing the relationship between a spherical aberration error signal and a variation in the thickness of the cover glass of the optical disc, in the optical pickup apparatus.

Fig. 10(a) is a graph showing the relationship between a spherical aberration error signal and a variation in the thickness of the cover glass of the optical disc, in the optical pickup apparatus.

Fig. 10(b) is a graph showing the relationship between a spherical aberration error signal and a variation in the thickness of the cover glass of the optical disc, in the optical pickup apparatus.

Fig. 11 is a graph showing the relationship between a spherical aberration error signal and a variation in the thickness of the cover glass of the optical disc, in the optical pickup apparatus.

Fig. 12(a) is a plan view showing the state of focal spots on the optical detector, in case where the second polarizing hologram element has been adjusted by rotation.

Fig. 12(b) is a plan view, as a comparative example, showing the state of focal spots on the optical detector, in case where the second polarizing hologram element has been adjusted by rotation.

Fig. 13(a) is a graph showing the relationship between a spherical aberration error signal and a variation in the thickness of the cover glass of the optical disc, in the case of Fig. 12(a).

Fig. 13(b) is a graph the relationship between a spherical aberration error signal and a variation in the thickness of the cover glass of the optical disc, when, in the case of Fig. 12(b), the second polarizing hologram element has been adjusted by rotation to correct a deviation in the optical axis direction between the second polarizing hologram element and the optical detector.

Fig. 14(a) is a plan view showing the state of a focal spot on the optical detector, in case where a focal point deviation has occurred.

Fig. 14(b) is a plan view showing the state of a focal spot on the optical detector, in case where a focal point deviation has occurred.

Fig. 15 relates to an optical pickup apparatus of another embodiment of the present invention and is a cross section outlining the optical pickup apparatus.

Fig. 16(a) is a plan view showing an optical integration unit used for the optical pickup apparatus.

Fig. 16(b) is a cross section showing the optical integration unit used for the optical pickup apparatus.

Fig. 17(a) shows an optical detector in the optical pickup apparatus and is a plan view showing the state of focal spots on the optical detector, when there are no focal point deviation and spherical aberration.

Fig. 17(b) is a plan view showing the state of focal spots on the optical detector, in case where a focal point deviation has occurred while offset has occurred in a focus error signal curve.

Fig. 18 is a graph showing a focus error signal curve detected by the optical detector of the optical pickup apparatus.

Fig. 19(a) is a graph showing a focus error signal curve detected by the optical detector, when the second polarizing hologram element of Embodiment 1 is adopted.

Fig. 19(b) is a graph showing a focus error signal curve detected by the optical detector, when the second polarizing hologram element of Embodiment 2 is adopted.

Fig. 20 is a plan view showing the second polarizing hologram element of the optical pickup apparatus.

Fig. 21 is a plan view showing the state of focal spots on the optical detector, in case where a focal point deviation similar to that of Fig. 17(b) has occurred.

Fig. 22 is a graph showing a focus error signal curve detected by the optical pickup apparatus using the second polarizing hologram element, with the length of a straight line w3 being varied.

Fig. 23 is a graph showing the relationship between a spherical aberration error signal and a variation in the thickness of a cover glass of an optical disc, in the optical pickup apparatus using the second polarizing hologram element.

Fig. 24 is relates to a conventional art and is a cross section outlining an optical pickup apparatus.

Fig. 25 is a plan view showing the structure of the second polarizing hologram element of the optical pickup apparatus, in a detailed manner.

Fig. 26 is a plan view showing the state of focal spots on the optical detector, in case where the second polarizing hologram element of Embodiment 1 is adopted.

Fig. 27 is a plan view showing the state of focal spots on the optical detector, in case where the second polarizing hologram element of Embodiment 2 is adopted.

REFERENCE NUMERALS

| | |
|---|---|
| 1 | SEMICONDUCTOR LASER (LIGHT SOURCE) |
| 2 | FIRST POLARIZING HOLOGRAM ELEMENT (LIGHT BEAM SEPARATION MEANS) |
| 3 | COLLIMATOR LENS |
| 4 | OBJECTIVE LENS (CONDENSING OPTICAL SYSTEM) |
| 6 | OPTICAL DISC (OPTICAL RECORDING MEDIUM) |
| 6a | COVER GLASS |
| 7 | OPTICAL DETECTOR (SPHERICAL ABERRATION DETECTION MEANS) |
| 10 | OPTICAL PICKUP APPARATUS |
| 11 | LIGHT BEAM |
| 12 | SECOND POLARIZING HOLOGRAM ELEMENT |
| 20 | OPTICAL INTEGRATION UNIT |
| 30 | OPTICAL PICKUP APPARATUS |
| 32 | FIRST POLARIZING HOLOGRAM ELEMENT (LIGHT BEAM SEPARATION MEANS) |
| 37 | OPTICAL DETECTOR |
| 40 | OPTICAL INTEGRATION UNIT |
| D1 | STRAIGHT LINE PROVIDED IN RADIAL DIRECTION AND INCLUDING OPTICAL AXIS |
| D2-D12 | DIVIDING STRAIGHT LINES |
| E1-E4 | CIRCULAR ARCS (DIVIDING LINES) |
| FES | FOCAL POINT (FOCUS) ERROR SIGNAL |
| M | REDUNDANT REFLECTED LIGHT |

OZ        OPTICAL AXIS
SAES      SPHERICAL ABERRATION ERROR SIGNAL
SP1-SP3   FOCAL SPOTS

## BEST MODE FOR CARRYING OUT THE INVENTION

[Embodiment 1]

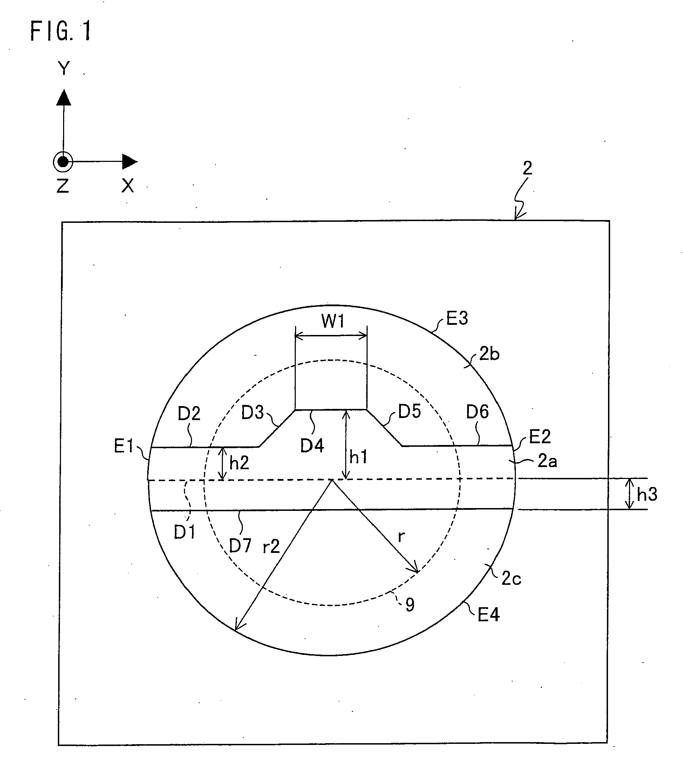

The following will describe an embodiment of the present invention with reference to Figs. 1-14 and 26. The present embodiment assumes that an aberration detection apparatus of the present invention is used for an optical pickup apparatus in an optical recording/reproduction apparatus which optically reproduces/records information from/onto an optical disc as optical recording medium.

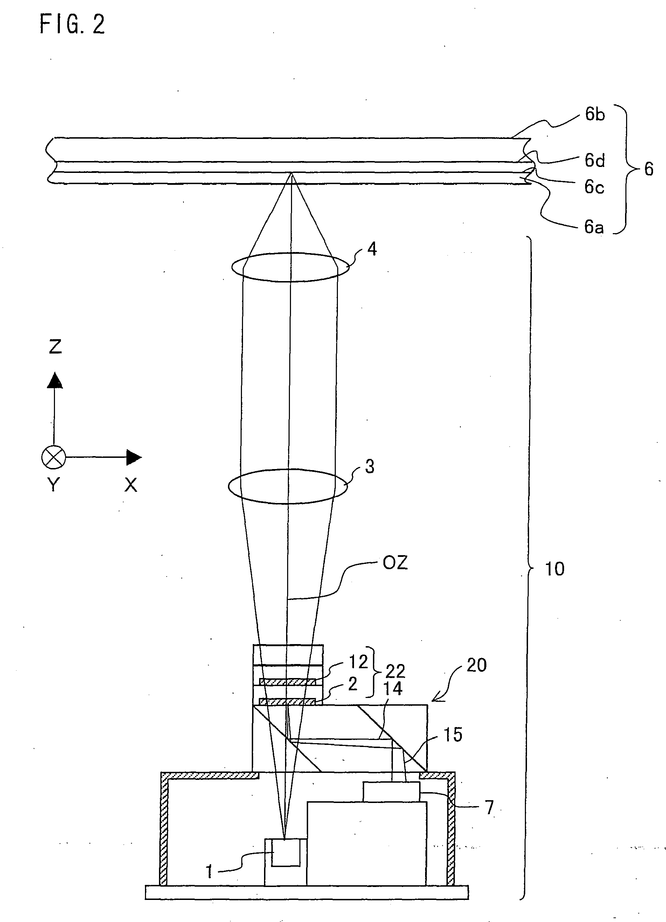

The optical recording/reproduction apparatus of the present embodiment includes, as shown in Fig. 2, a spindle motor (not illustrated) which rotates an optical disc (optical recording medium) 6, an optical pickup apparatus 10 which records/reproduces information onto/from the optical disc 6, and a drive control section and a control signal generation circuit (both not illustrated) which are used for driving and controlling the spindle motor and the optical pickup apparatus 10.

The optical pickup apparatus 10 includes a semiconductor laser (light source) 1 for irradiating the optical disc 6 with a light beam, a polarizing diffraction element 22, a collimator lens 3, an objective lens (condensing optical system) 4, and an optical detector (spherical aberration detection means) 7. The polarizing diffraction element 22 and the optical detector (aberration detection means) 7 constitute the aberration detection apparatus of the present invention.

In the optical pickup apparatus 10, a light beam emitted from the semiconductor laser 1 of the optical integration unit 20 is converted to parallel light by the collimator lens 3, and then condensed on the optical disc 6 through the objective lens 4. This light beam (hereinafter, return light) reflected on the optical disc 6 passes through the objective lens 4 and the collimator lens 3 again, and the light is received by the optical detector 7 mounted in the optical integration unit 20.

The collimator lens 3 is moved in the optical axis direction (Z direction) by a spherical aberration correction mechanism, so that spherical aberration occurring in the optical system of the optical pickup apparatus 10 is corrected.

The optical disc 6 is constituted by a cover glass 6a, a substrate 6b, and two information recording layers 6c and 6d which are formed between the cover glass 6a and the substrate 6b. That is, the optical disc 6 is a two-layer disc, and reproduces information from the information recording layer 6c and/or 6d and records information onto the information recording layer 6c and/or 6d, by condensing a light beam on the information recording layer 6c or 6d.

To put it differently, in the optical pickup apparatus 10, a light beam emitted from the semiconductor laser 1 passes through the polarizing diffraction element 22 as zeroth-order diffracted light, is converted into parallel light by the collimator lens 3, then passes through the objective lens 4, and is condensed on the information recording layer 6c or 6d of the optical disc 6.

The light beam reflected on the information recording layer 6 or information recording layer 6d of the optical disc 6 passes through the objective lens 4 and the collimator lens 3 in this order and enters the polarizing diffraction element 22, and the light is diffracted in the polarizing diffraction element 22 and condensed on the optical detector 7.

Therefore, it is hereinafter assumed that an information recording layer of the optical disc 6 indicates either the information recording layer 6c or the information recording layer 6d, and the optical pickup apparatus 10 can condense a light beam and record/reproduce information onto/from either one of the information recording layers 6c and 6d.

The aforesaid control signal generation circuit (not illustrated) generates a tracking error signal, a focal point deviation signal (hereinafter, focus error signal) FES, and a spherical aberration error signal SAE, based on signals acquired by the optical detector 7. The tracking error signal is supplied to a tracking drive circuit, the focus error signal FES is supplied to a focus drive circuit, and the spherical aberration error signal SAES is supplied to a spherical aberration correction mechanism drive circuit. These drive circuits control the other members in accordance with the respective error signals.

The focus drive circuit (not illustrated) receives the focus error signal FES, and based on this focus error signal FES, the objective lens drive mechanism is controlled so that the objective lens 4 is moved in the optical axis direction and hence a focal point deviation of the objective lens 4 is corrected.

The spherical aberration correction mechanism drive circuit (not illustrated) receives the spherical aberration error signal SAES, and based on this spherical aberration error signal SAES, the spherical aberration correction actuator (not illustrated) is controlled so that the collimator lens 3 is moved in the optical axis direction and spherical aberration occurring in the optical system of the optical pickup apparatus 10 is corrected.

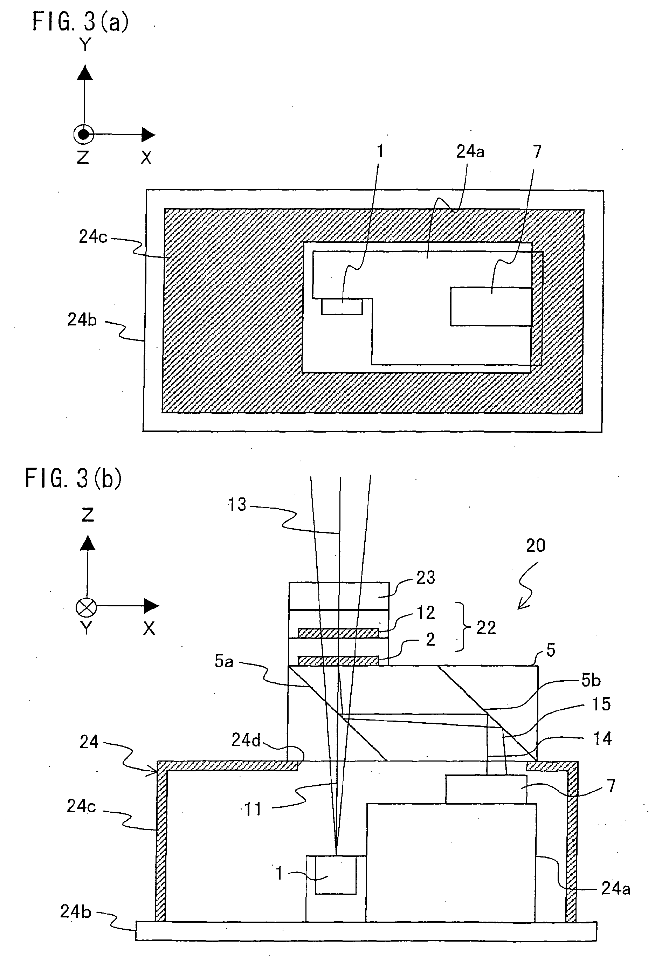

Figs. 3(a) and 3(b) show the arrangement of the optical integration unit 20 shown in Fig. 2. Fig. 3(a) is a plan view of the optical integration unit 20 viewed in the direction in parallel to the optical axis OZ (see Fig. 2), i.e. viewed in the z direction. To simplify the figure, the polarizing beam splitter 5, the polarizing diffraction element 22, and the quarter wave length plate 23 are omitted in Fig. 3(a).

As shown in Figs. 3(a) and 3(b), the optical integration unit 20 includes the semiconductor laser 1, the optical detector 7, the polarizing beam splitter 5, the polarizing diffraction element 22, the quarter wave length plate 23, and a package 24.

The package 24 is constituted by a stem 24a, a base 24b, and a cap 24c. The cap 24c has a window 24d to allow light to pass through. In the package 24, the semiconductor laser 1 and the optical detector 7 are provided. Fig. 3(b) is a side view of the package 24 viewed in the y direction, while the package is viewed in the z direction (optical axis direction) in Fig. 3(a). Fig. 3(b) is provided to show how the semiconductor laser 1 and the optical detector 7 are disposed in the package 24.

As shown in Fig. 3(b), the optical detector 7 is mounted on the stem 24a, where the semiconductor laser 1 is provided on the side of the stem 24a. To secure the light path of a light beam 11 emitted from the semiconductor laser 1 and the light path of return light entering the optical detector 7, the light beam emitting section of the semiconductor laser 1 and the light receiving section of the optical detector 7 are disposed to be within the area of the window section 24d.

The following will discuss how the aforesaid members are disposed, with reference to Figs. 3(a) and 3(b). For the sake of convenience, the following assumes that (i) a surface of the polarizing beam splitter 5, where the light beam 11 emitted from the semiconductor laser 1 enters, is a light beam entering surface of the polarizing beam splitter 5, whereas (ii) a surface of the polarizing beam splitter 5, where the return light enters, is a return light entering surface of the polarizing beam splitter 5. It is also assumed that (iii) a surface of the polarizing diffraction element 22, where the light beam 11 emitted from the semiconductor laser 1 enters, is a light beam entering surface of the polarizing diffraction element 22, whereas (iv) a surface of the polarizing diffraction element 22, where return light enters, is a return light entering surface of the polarizing diffraction element 22.

As shown in Fig. 3(b), the polarizing beam splitter 5 is provided on the package 24. More specifically, the light beam entering surface of the polarizing beam splitter 5 is provided on the package 24 so as to cover the window section 24d.

The polarizing diffraction element 22 is provided on the optical axis of the light beam emitted from the semiconductor laser 1, in such a matter that the light beam entering surface of the element 22 opposes the return light entering surface of the polarizing beam splitter 5.

The semiconductor laser 1 emits a light beam 11 with the wavelength $\lambda=405$nm. Also, in the present embodiment, the light beam 11 is linearly-polarized light (P polarized light) having a polarization vibration plane in the x direction with respect to the optical axis direction (z direction) in the figure. The light beam 11 emitted from the semiconductor laser 1 enters the polarizing beam splitter 5.

The polarizing beam splitter 5 has a polarizing beam splitter (PBS) surface 5a and a reflection mirror (reflection surface) 5b.

The polarizing beam splitter (PBS) surface 5a of the present embodiment allows linearly-polarized light (P polarized light), which has a vibration plane in the x direction with respect to the optical axis direction (z direction) shown in the figure, to pass through, whereas reflects linearly-polarized light (S polarized light) having a vibration plane orthogonal to the aforesaid vibration plane, i.e. having a vibration plane in the y direction with respect to the optical axis direction (z direction) shown in the figure.

The polarizing beam splitter (PBS) surface 5a is provided on the optical axis of the p-polarized light beam emitted from the semiconductor laser 1 so that the light beam 11 passes through the polarizing beam splitter surface 5a. The reflection mirror 5b is provided to be in parallel to the polarizing beam splitter (PBS) surface 5a.

After entering the polarizing beam splitter (PBS) surface 5a, the light beam 11 (P polarized light) passes through the polarizing beam splitter (PBS) surface 5a, without being changed. After passing through the polarizing beam splitter (PBS) surface 5a, the light beam 11 enters the polarizing diffraction element 22.

Now, details of the polarizing diffraction element 22 will be given. The polarizing diffraction element 22 is constituted by a first polarizing hologram element (light beam separation means) 2 and a second polarizing hologram element 12.

The first polarizing hologram element 2 and the second polarizing hologram element 12 are both provided on the optical axis of the light beam 11. Comparing the first polarizing hologram element 2 with the second polarizing hologram element 12, the first polarizing hologram element 2 is closer to the semiconductor laser 1. Alternatively, for example, the second polarizing hologram element 12 may be arranged to be closer to the semiconductor laser 1 as compared to the first polarizing hologram element 2.

The second polarizing hologram element 12 diffracts P polarized light and allows S polarized light to pass through. The first polarizing hologram element 2 diffracts S polarized light and allows P polarized light to pass through. Such diffraction of polarized light is conducted by a grooved structure (grating) formed in each of the polarizing hologram elements 2 and 12. A diffraction angle is determined by the pitch of the grating (hereinafter, grating pitch).

In the second polarizing hologram element 12, a hologram pattern is formed for generating 3 beams used for detecting a tracking error signal (TES).

More specifically, the P-polarized light beam 11 having passed through the polarizing beam splitter (PBS) surface 5a enters the first polarizing hologram element 2 which constitutes the polarizing diffraction element 22. The light beam is diffracted therein and emitted from the first polarizing hologram element 2, as 3 beams (a main beam and two sub beams) for detecting a tracking error signal (TES). Examples of TES detection by using 3 beams include a 3 beam method, a differential push pull (DPP) method, and a phase shift DPP method.

Among the incoming lights, the first polarizing hologram element 2 diffracts S polarized light while allows P polarized light to pass through without changes.

That is to say, P-polarized light beam 11 emitted from the first polarizing hologram element 2 enters the second polarizing hologram element 12 and diffracted therein. The P-polarized light beam 11 is diffracted by the second polarizing hologram element 12 and then enters the quarter wave length plate 23. Details of the hologram pattern of the first polarizing hologram element 2 will be discussed later.

The quarter wave length plate 23 receives linearly-polarized light and converts it into circularly-polarized light and outputs the same. Therefore, the P-polarized light beam 11 (linearly-polarized light) entering the quarter wave length plate 23 is converted into a circularly-polarized light beam and emitted from the optical integration unit 20.

The circularly-polarized light beam emitted from the optical integration unit 20 is converted into parallel light by the collimator lens 3, and then condensed on the optical disc 6 by the objective lens 4. The light beam reflected on the optical disc 6, i.e. the return light passes through the objective lens 4 and the collimator lens 3 again, and enters the quarter wave length plate 23 of the optical integration unit 20 again.

The return light entering the quarter wave length plate 23 of the optical integration unit 20 is circularly-polarized light, and this return light is converted, by the quarter wave length plate 23, into linearly-polarized light (S polarized light) having a vibration plane in the y direction with respect to the optical axis direction (z direction) shown in the figure. The S-polarized return light enters the second polarizing hologram element 12 and passes through the second polarizing hologram element 12 without being changed, and then enters the first polarizing hologram element 2.

The S-polarized return light having entered the first polarizing hologram element 2 is diffracted into zeroth-order diffracted light (non-diffracted light) and ±first-order diffracted light (diffracted light) and emitted from the first polarizing hologram element 2. The S-polarized return light enters the polarizing beam splitter 5 and reflected on the polarizing beam splitter (PBS) surface 5a. Then the return light is further reflected on the reflection mirror 5b and emitted from the polarizing beam splitter 5. The S-polarized return light emitted from the polarizing beam splitter 5 is received by the optical detector 7. This optical detector 7 is provided at a focal point of the positive first-order light traveling from the first polarizing hologram element 2. The light receiving section pattern of the optical detector 7 will be discussed later.

The hologram pattern formed on the second polarizing hologram element 12 is an orderly straight grating provided for detection of a tracking error signal (TES) by means of the 3 beam method or the differential push pull (DPP) method.

As shown in Fig. 1, the first polarizing hologram element 2 is divided into 3 areas 2a, 2b, and 2c.

The first area 2a is circumscribed by (i) dividing straight lines D2 and D6 (distanced by h2 from the straight line D1) and a dividing straight line D4 (distanced by h1 from the straight line D1 and w1 in length), which are in parallel to the straight line D1 which is orthogonal to a radial direction and includes the optical axis, (ii) dividing straight lines D3 and D5 which are axisymmetric with respect to the straight line along the track direction (x direction) orthogonal to the optical axis and are tilted by predetermined angles (angle ±θ) from the straight line, (iii) a dividing straight line D7 (distanced by h3 from the straight line D1) in parallel to the straight line D1, and (iv) circular arcs E1 and E2 (each of which is r2 in radius) centered on the optical axis.

The second area 2b is circumscribed by the dividing straight line D2-D6 and a circular arc E3 (r2 in radius) centered on the optical axis. The third area 2c is circumscribed by a circular arc E4 (r2 in radius) centered on the optical axis and the dividing straight line D7.

The aforesaid dividing lines are all orthogonal to the optical axis. A spot where a light beam having passed through the area 2b is condensed on the optical detector 7 is termed SP1, a spot where a light beam having passed through the area 2a is condensed on the optical detector 7 is termed SP2, and a spot where a light beam having passed through the area 2c is condensed on the optical detector 7 is termed SP3.

Provided that the radius of the effective diameter of a light beam on the first polarizing hologram element 2, which diameter is determined by the aperture of the objective lens 4, is indicated as r, the distance h1 between the straight line D1 including the optical axis and the dividing straight line D4 is 0.6r, the distance h2 between the straight line D1 including the optical axis and the dividing straight line D2 is 0.3r, the distance between the straight line D1 including the optical axis and the dividing straight line D7 is 0.125r, θ=±45deg, and the length w1 of the dividing straight line D4 is 0.6r. The radius r2 is sufficiently longer than the radius r, in consideration of objective lens shift and adjustment error.

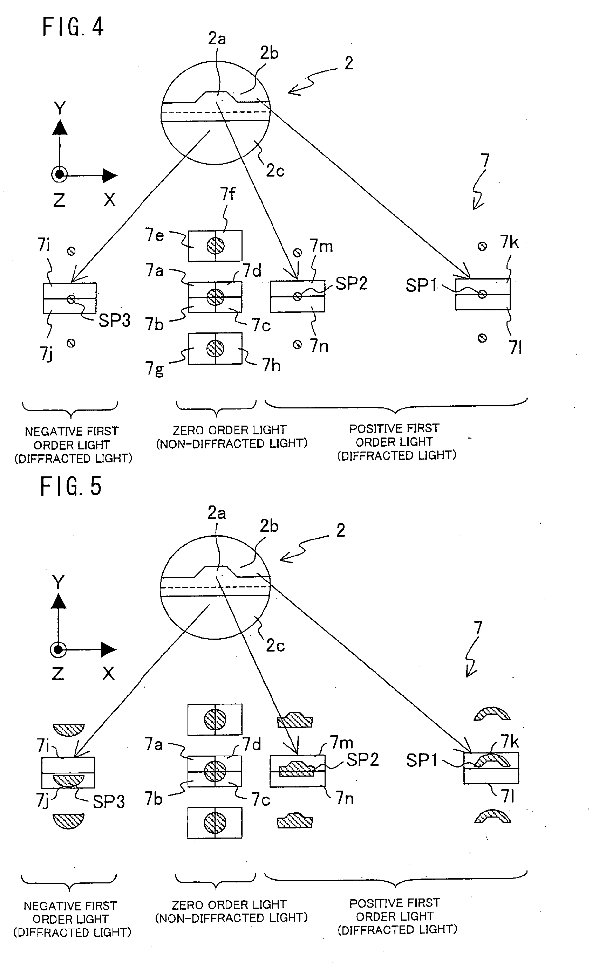

Fig. 4 shows light beams on the optical detector 7, in case where the light beam is focused on the information recording layer 6c while the position of the collimator lens 3 has been adjusted in the optical axis direction in order to prevent spherical aberration from occurring in the light beam condensed by the objective lens 4, with respect to the thickness of the cover glass 6a of the optical disc 6 shown in Fig. 2. Fig. 4 also shows the relationship between three areas 2a 2b, and 2c of the first polarizing hologram element 2 and the traveling directions of positive first-order diffracted light. In reality, the center of the first polarizing hologram element 2 is provided at a position corresponding to the centers of the light receiving sections 7a-7d of the optical detector 7. However, the center of the first polarizing hologram element 2 is deviated in the y direction for illustrative purposes.

In the incoming optical system, three light beams (main beam and two sub beams) formed by the second polarizing hologram element 12 are reflected on the optical disc 4 and the beams are separated, in the outgoing optical system, into non-diffracted light (zeroth-order diffracted light) 14 and diffracted light (positive first-order diffracted light) 15 by the first polarizing hologram element 2.

As shown in Fig. 4, the optical detector 7 is constituted by 14 light receiving sections 7a-7n. The optical detector 7 has these light receiving sections in order to receive light beams required for detecting an RF signal and a servo signal, among non-diffracted light (zeroth-order diffracted light) 14 and diffracted light (positive first-order diffracted light) 15. More specifically, three sets of non-diffracted light (zeroth-order diffracted light) 14 and 9 sets of diffracted light (positive first-order diffracted light) 15 of the first polarizing hologram element 2 are formed, i.e. 12 light beams are formed. Among the light beams, non-diffracted light (zeroth-order diffracted light) 14 is arranged to be a light beam with a certain size, in order to achieve detection of a tracking error signal (TES) by the push pull method. In the present embodiment, to allow non-diffracted light (zeroth-order diffracted light) 14 to have a certain beam diameter, the optical detector 7 is provided at a position slightly above the focal point of the non-diffracted light (zeroth-order diffracted light) 14. Since the present invention is not limited to this arrangement, the optical detector 7 may be provided at a position below the focal point of the non-diffracted light (zeroth-order diffracted light) 14.

In this manner, the light beams whose beam diameters are sufficiently long are condensed at the border sections of the four light receiving sections 7a-7d. It is therefore possible to adjust the positions of the non-diffracted light (zeroth-order diffracted light) 14 and the optical detector 7, by adjusting the outputs of the light receiving sections 7a-7b to be equal to one another.

Fig. 5 shows light beams on the optical detector 7, when the objective lens 4 shown in Fig. 2 has moved closer to the optical disc 6. As the objective lens 4 moves closer to the optical disc 6, the beam diameter of a light beam increases. However, the light beams do not go beyond the borders of the light receiving sections 7a-7d.

How a servo signal is generated will be described with reference to Figs. 4 and 5. The description below assumes that output signals from the light receiving sections 7a-7n are termed Sa-Sn.

First, a reproduction signal RF is detected by using non-diffracted light (zeroth-order diffracted light) 14. That is, a reproduction signal RF is figured out by:

$$RF = Sa + Sb + Sc + Sd$$

A tracking error signal TES is figured out by:

$$TES = \{(Sa + Sb) - (Sc + Sd)\}$$

$$- \alpha\{(Se - Sf) + (Sg - Sh)\}$$

It is noted that a is a coefficient optimal for canceling offsets caused by objective lens shift and optical disc tilt.

A focus error signal FES is detected by the double knife edge method. That is, a focus error signal FES is figured out by:

$$FES = (Si - Sj) - \beta(Sk - Sl)$$

It is noted that $\beta$ is a coefficient optimal for canceling offset caused by the difference of light amount between two spots.

How a focus error signal FES is detected will be explained.

First, assume that either the information recording layer 6c or 6d of the optical disc 6 is in focus. As shown in Fig. 4, since the focal spot SP1 is formed on the border between the light receiving section 7k and the light receiving section 71, a first output signal (Sk-Sl) is 0. On the other hand, since the focal spot SP3 is formed on the border between the light receiving section 7i and the light receiving section 7j, a third output signal (Si-Sj) is also 0. The focus error signal FES is therefore 0.

Next, assume that the focal point is deviated from the information recording layer 6c or 6d because the optical disc 6 moves closer to or farther away from the objective lens 4. As shown in Fig. 5, as the shapes of the focal spots SP1 and SP3 are changed, the first output signal (Sk-S1) and the third output signal (Si-Sj) have values corresponding to the focal point deviation, respectively. The focus error signal FES therefore has a nonzero value corresponding to the focal point deviation.

In consideration of the above, to always keep the focal point on the information recording layer, the optical lens 4 is moved in the optical axis direction in such a way as to keep the output of the focus error signal FES to be always 0.

Assume that spherical aberration occurs in the optical system of the optical pickup apparatus 10 but no focal point deviation occurs therein. Spherical aberration occurs when the thickness of the cover glass 6a of the optical disc 6 is changed or when interlayer jump between the information recording layer 6c and 6d is conducted.

For example, in case where spherical aberration occurs due to a change in the thickness of the cover glass 6a, the focal points (where the beam diameter is minimized) are different between a part of the light beam around the optical axis of the light beam and a part of the light beam at the periphery of the light beam. In consideration of this, the part around the optical axis is diffracted by the first area 2a of the first polarizing hologram element 2. As a result, when spherical aberration occurs, the second output signal (Sm-Sn) detecting focal point deviation around the optical axis of the light beam and the first output signal (Sk-Sl) detecting focal point deviation at the periphery of the light beam are not zero, and have values corresponding to the degree of the spherical aberration. The direction of focal point deviation due to spherical aberration is reversed between the beam inner periphery section and the beam outer periphery section. It is therefore possible to obtain a spherical aberration error signal SAES with high sensitivity, by figuring out a signal indicating a difference between the first output signal (Sk-Sl) and the second output signal (Sm-Sn).

In other words, the spherical aberration error signal SAES is figured out by:

$$SAES = (Sm-Sn) - \gamma \times (Sk-Sl)$$

Now, how a spherical aberration error signal SAES is detected will be explained.

First, assume that there is no spherical aberration. As shown in Fig. 4, since the focal spot SP1 is formed on the border between the light receiving section 7k and the light receiving section 71, the first output signal (Sk-S1) is 0. In the meanwhile, since the focal spot SP2 is formed on the border between the light receiving section 7m and the light receiving section 7n, the second output signal (Sm-Sn) is also 0. The spherical aberration error signal SAES is therefore 0.

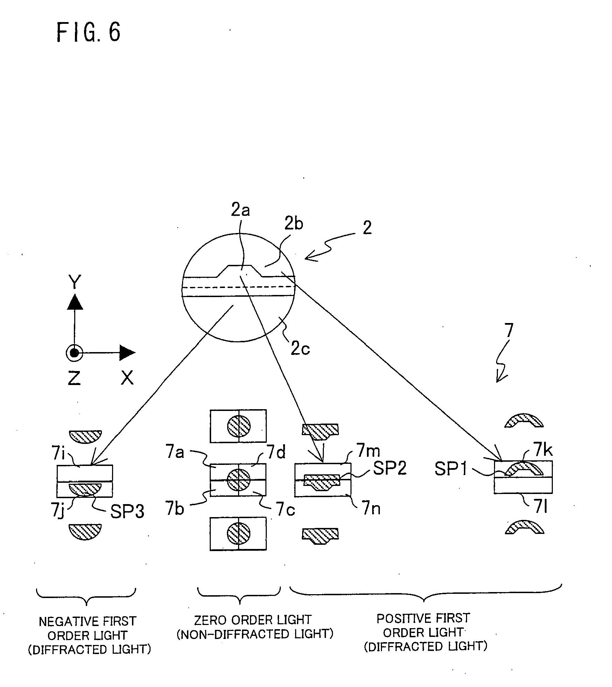

Next, assume that spherical aberration has occurred. As shown in Fig. 6, although there is no focal point deviation, the focal spot SP1 and the focal spot SP2 are changed from condensed states to defocused states. On this account, the first output signal (Sk-S1) and the second output signal (Sm-Sn) both have nonzero values. Since the defocusing direction is reversed between the focal spot SP1 and the focal spot SP2, it is possible to obtain a spherical aberration error signal SAES with high sensitivity, by figuring out a signal indicating the difference between the aforesaid signals.

Furthermore, assume that spherical aberration occurs while a slight focal point deviation remains in the optical system of the optical pickup apparatus 10. In this case, even if there is no spherical aberration, the focal spot SP1 and focal spot SP2 are in the defocused states on account of the focal point deviation, and hence the first output signal (Sk-S1) and the second output signal (Sm-Sn) have nonzero values, respectively. If the focal point deviation is small, the first output signal (Sk-Sl) and the second output signal (Sm-Sn) do not depart from the straight lines so much. It is therefore possible to remove the influence of the focal point deviation from the spherical aberration error signal SAES by optimizing the coefficient y. It is noted that, since the polarity of the defocusing on account of spherical aberration is reversed between the focal spot SP1 and focal spot SP2, the optimization of the coefficient $\beta$ does not prevent the spherical aberration error signal SAES from being output.

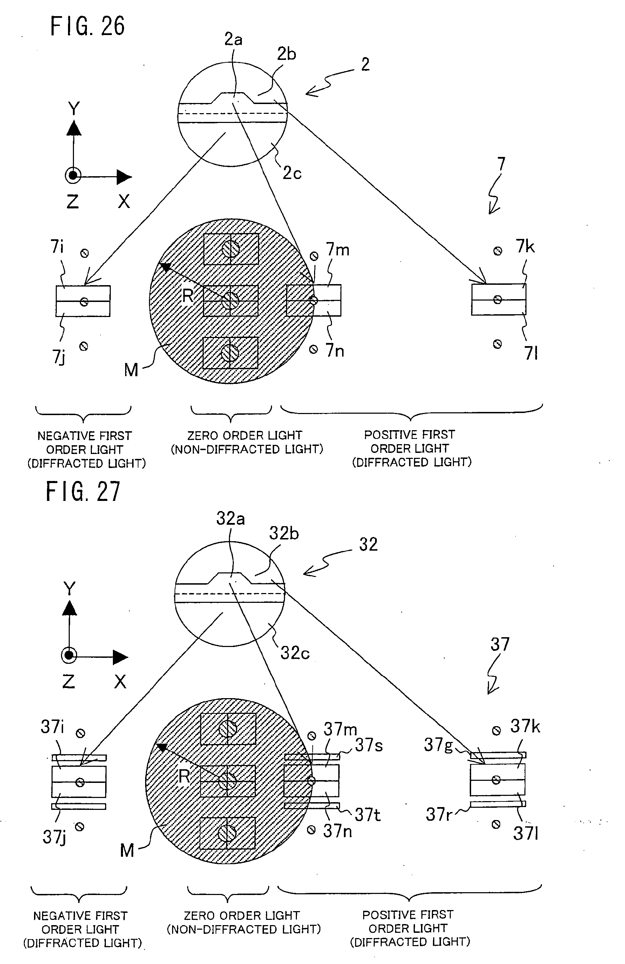

However, when reproduction from or recording onto a multilayer disc is carried out, redundant reflected light from a non-reproduction layer enters the light receiving sections 7m and 7n. Fig. 26 shows a spot which is formed on the optical detector 7 by redundant reflected light M traveling from a non-reproduction layer of a multilayer disc.

The redundant reflected light M has a circular shape centered on the optical axis and is R in radius. When redundant reflected light M enters the light receiving sections 7m and 7n which condense light on the optical detector 7, no offset occurs if the redundant reflected light M has an even light intensity distribution. However, in reality the distribution is uneven and hence offset occurs due to unbalance between an amount of light entering the light receiving section 7m and an amount of light entering the light receiving section 7n. This induces offset in the second output signal (Sm-Sn) and influences on the spherical aberration error signal SAES1, with the result that spherical aberration correction cannot be precisely done. It is noted that the light receiving section 7k and the light receiving section 7l are positioned so that redundant reflected light M is not focused thereon. In other words, the shortest distances between the optical axis and the light receiving sections 7k and 7l are set to be longer than the radius R of the redundant reflected light M.

In this case, the spherical aberration error signal SAES2 can be generated from signals (second output signal) from the light receiving section 7k and the light receiving section 7l which are free from the influence of the redundant reflected light M.

$$SAES2 = Sk - Sl$$

Using this equation, it is possible to generate the spherical aberration error signal SAES2 free from the influence of the redundant reflected light M traveling from a non-reproduction layer of a multilayer disc.

Next, assume that spherical aberration occurs while a focal point deviation remains in the optical system of the optical pickup apparatus 10. Since the spherical aberration error signal SAES2 does not take account of a difference between the first output signal and the second output signal, the spherical aberration error signal SAES2 is changed due to a focal point deviation and hence spherical aberration cannot be precisely detected.

To restrain the influence of the focal point deviation, a spherical aberration error signal SAES3 is figured out by the following equation, by using a focus error signal FES:

$$SAES3 = (Sk - Sl) - \delta \times FES$$

In this equation, the constant $\delta$ is determined so that a change in the spherical aberration error signal SAES3 is small even if a focal point deviation occurs. When offset occurs in the second output signal (Sk-Sl) due to a focal point deviation caused by spherical aberration, the offset is reduced by increasing or decreasing the focus error signal FES. This makes it possible to precisely detect spherical aberration even if both spherical aberration and focal point deviation occur.

The description above assumes that the center of the light beam is identical with the center of the second polarizing hologram element 12.

An actual optical pickup apparatus 10 performs tracking control in such a manner that, in order to condense a light beam on a track formed on the information recording layer 6c or 6d of the optical disc 6, the objective lens 4 is moved in a radial direction of the optical disc 6 so that the light beam is kept to always focus on the track.

While no problem occurs when the first polarizing hologram element 2 is combined with the objective lens 4, the center of the light beam may not be identical with the center of the first polarizing hologram element 2 after tracking control, when the first polarizing hologram element 2 and the objective lens 4 are attached to the optical pickup apparatus 10 as individual members.

If a conventional divided hologram element 102 shown in Fig. 25 is adopted, parts of a light beam, which are supposed to be diffracted in the respective areas 102a and 102b of the hologram element 102, are diffracted in wrong areas. As such, the presence of a deviation between the centers of the light beam and the hologram element 102 changes electric signals generated in the areas 102a and 102b of the optical detector 107. The spherical aberration error signal SAES is changed by a deviation between the centers of the light beam and the hologram element 102, even if the degree of spherical aberration is constant.

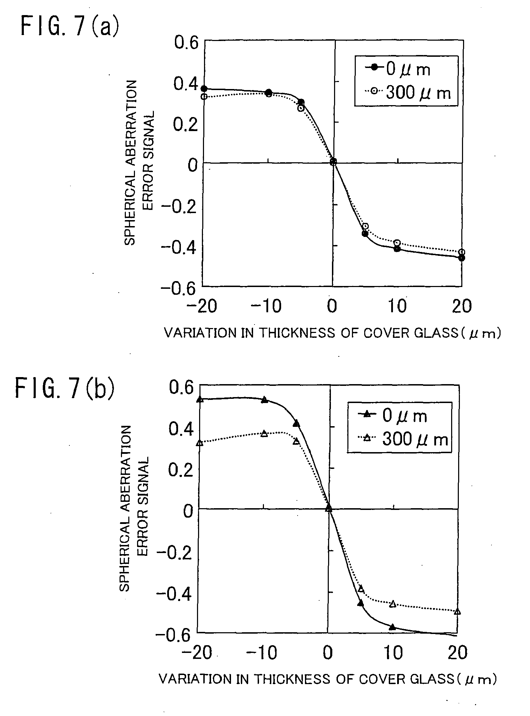

Fig. 7(a) shows a graph indicating the relationship between the spherical aberration error signal SAES and a change in the thickness of the cover glass 6a of the optical disc 6, when the first polarizing hologram element 2 of the present embodiment is adopted. As a comparative example, Fig. 7(b) shows a graph indicating the relationship between the spherical aberration error signal SAES and a change in the thickness of the cover glass 6a of the optical disc 6, when the hologram element 102 shown in Fig. 25 is adopted. The radius r1 of the dividing lines on the hologram element 102 is 0.7r, and the distance h1 from the dividing straight line D4 which is one of the dividing lines on the first polarizing hologram element 2 to the straight line D1 including the optical axis is 0.6r.

The graph in Fig. 7(a) shows the spherical aberration error signal SAES when there is no deviation between the centers of the first polarizing hologram element 2 and the light beam, i.e. when a deviation amount is 0$\mu$m. On the other hand, the graph in Fig. 7(b) shows the spherical aberration error signal SAES when the centers of the first polarizing hologram element 2 and the light beam are deviated by 300$\mu$m in the radiation direction of the optical disc 6, due to tracking control. Since the radius r of the effective diameter of the objective lens 4 is 1.5mm, the deviation of 300$\mu$m is equivalent to 20% of the effective diameter.

According to the graphs in Figs. 7(a) and 7(b), if the light beam is divided at the dividing lines of the first polarizing hologram element 2, the spherical aberration error signal SAES is rarely affected even if the centers of the first polarizing hologram element 2 and the light beam are deviated by 300μm. On the other hand, according to the figures, if the light beam is divided at the dividing lines of the hologram element 102, the spherical aberration error signal SAES is clearly affected by the deviation between the centers of the light beam and the hologram element 102.

Comparing absolute values of signal sensitivity of the spherical aberration error signals SAES, it is observed that sufficient sensitivity is obtained when the light beam is divided at the dividing lines of the first polarizing hologram element 2, even if the sensitivity is lower than the case of the hologram element 102.

Because of the above, to maximally restrain the spherical aberration error signal SAES from being influenced by a deviation of the optical axis in a radial direction of the optical disc 6, it is preferable that the division be made at straight lines in parallel to a radial direction. In addition to the above, when the light beam is divided at the dividing lines of the hologram element 102, the signal sensitivity of the spherical aberration error signal SAES is maximized. On this account, the dividing lines of the first polarizing hologram element 2 are required to be similar to those of the hologram element 102. Conditions to achieve this are as follows: provided that the radius of the effective diameter of the light beam on the first polarizing hologram element 2, which diameter is determined by the aperture of the objective lens 4, is indicated as r, the distance h1 between the dividing straight line D4 and the straight line D1 including the optical axis is 0.6r, the distance h2 between the dividing straight line D2 and the straight line D1 including the optical axis is 0.3r, θ=±45deg, and the length w1 of the dividing straight line D4 is 0.6r.

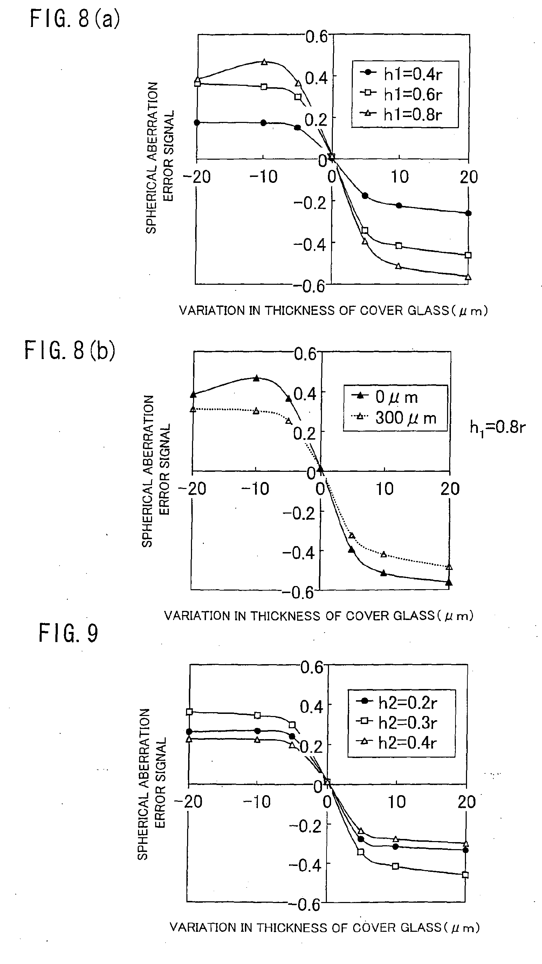

Fig. 8(a) shows the relationship between the spherical aberration error signal SAES and a change in the thickness of the cover glass 6a of the optical disc 6, when the distance h1 between the dividing straight line D4 and the straight line D1 including the optical axis is set at 0.4r, 0.6r, and 0.8r. The graph shows that the sensitivity of the detection of the spherical aberration error signal SAES is small when the distance h1 between the dividing straight line D4 and the straight line D1 including the optical axis is 0.4r.

Fig. 8(b) shows the spherical aberration error signal SAES when the distance h1 between the dividing straight line D4 and the straight line D1 including the optical axis is set at 0.8r and the centers of the light beam and the first polarizing hologram element 2 are deviated from one another by 300μm in a radial direction of the optical disc 6, on account of tracking control. As compared to the case shown in Fig. 8(a) where the distance h1 between the dividing straight line D4 and the straight line D1 including the optical axis is 0.6r, the spherical aberration error signal SAES is significantly influenced by the deviation between the centers of the light beam and the first polarizing hologram element 2, when the distance h1 between the dividing straight line D4 and the straight line D1 including the optical axis is set at 0.8r. It is therefore considered that the distance h1 between the dividing straight line D4 and the straight line D1 including the optical axis is preferably set at 0.6r.

Fig. 9 shows the relationship between the spherical aberration error signal SAES and a change in the thickness of the cover glass 6a of the optical disc 6, when the distance h2 between the straight line D1 including the optical axis and the dividing straight line D2 is set at 0.4r, 0.6r, and 0.8r. According to Fig. 9, the sensitivity of the detection of the spherical aberration error signal SAES is small when the distance h2 between the straight line D1 including the optical axis and the dividing straight line D2 is set at 0.2r and 0.4r. It is therefore understood that the distance h2 between the straight line D1 including the optical axis and the dividing straight line D2 is preferably set at 0.3r.

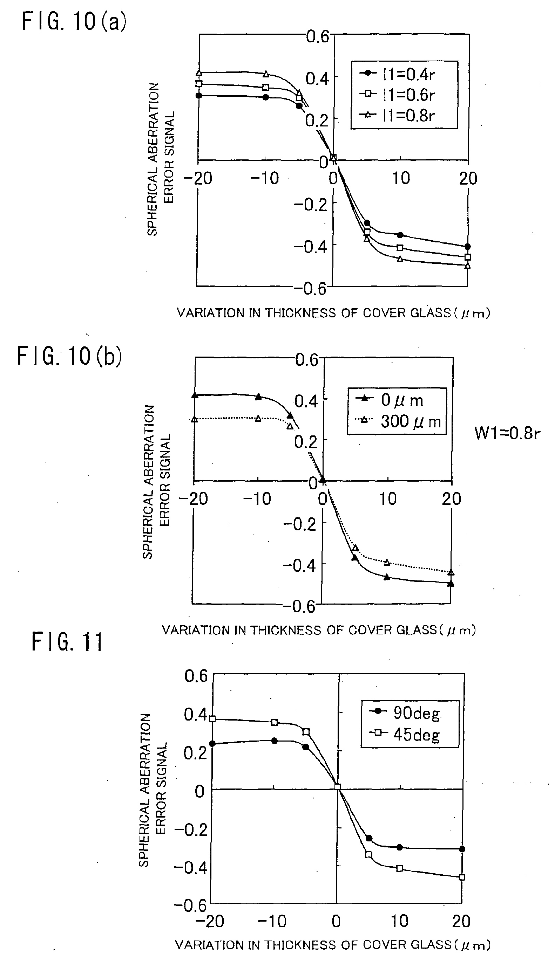

Fig. 10(a) shows the relationship between the spherical aberration error signal SAES and a change in the thickness of the cover glass 6a of the optical disc 6, when the length w1 of the dividing straight line D4 is set at 0.4r, 0.6r, and 0.8r. It is understood that the sensitivity of the detection of the spherical aberration error signal SAES decreases as the length w1 of the dividing straight line D4 decreases in the order of 0.8r, 0.6r, and 0.4r.

Fig. 10(b) shows the spherical aberration error signal SAES when the length w1 of the dividing straight line D4 is set at 0.8r and the centers of the light beam and the first f are deviated from one another by 300μm in a radial direction of the optical disc 6, on account of tracking control. As compared to the case where the distance h1 between the dividing straight line D4 and the straight line D1 including the optical axis is set at 0.6r as shown in Fig. 8(a), the influence of the deviation between the centers of the first polarizing hologram element 2 and the light beam is significant when the distance h1 between the dividing straight line D4 and the straight line D1 including the optical axis is set at 0.8r. Because of this, the length w1 of the dividing straight line D4 is preferably set at 0.6r.

Fig. 11 shows the relationship between the spherical aberration error signal SAES and a change in the thickness of the cover glass 6a of the optical disc 6, when θ is set at ±45deg and ±90deg. It is understood that the signal sensitivity of the spherical aberration error signal SAES is high when θ is set at ±45deg.

It is noted that, since the division is made along the straight lines in parallel to a radial direction, the spherical aberration error signal SAES is not influenced by a deviation between the centers of the first polarizing hologram element 2 and the light beam.

The following will describe how the first polarizing hologram element 2 is adjusted, with reference to Figs. 4-6 and Figs. 12 and 13.

First, as shown in Fig. 2, return light traveling from the optical disc 6 is arranged to enter the first polarizing hologram element 2. Subsequently, the position of the first polarizing hologram element 2 is adjusted in the X and Y directions so that the non-diffracted light (zeroth-order diffracted light) 14 having passed through the first polarizing hologram element 2 evenly enters the optical detectors 7a-7d as shown in Fig. 4. By doing so, the deviation between the centers of the first polarizing hologram element 2 and the optical axis is adjusted.

When the first polarizing hologram element 2 is divided as shown in Fig. 1, the ratio between a light amount detected in the first area 2a and a light amount detected in the second area 2b is changed as the light beam 11 moves in the X direction on the first polarizing hologram element 2. On the other hand, when the light beam 11 moves in the Y direction on the first polarizing hologram element 2, the ratio between (i) a light amount calculated by adding a light amount detected in the first area 2a to a light amount detected in the second area 2b and (ii) a light amount detected in the third area 2c is changed. It is therefore possible to align the centers of the first polarizing hologram element 2 and the light beam 11 by taking account of the relations among the aforesaid light amounts. Since it is unnecessary to form a division pattern for alignment, a focus error signal FES can be detected by the double knife edge method from the entire area of the light beam 11. This makes it possible to stably perform focus control.

In case where there is a deviation in the optical axis direction between the first polarizing hologram element 2 and the optical detector 7, focal spots SP1, SP2, and SP3 are in defocused states as in the case of Fig. 5. In other words, both of the first output signal (Sk-Sl) and the third output signal (Si-Sj) have non-zero values, and hence FES as a result of the following equation is not zero:

$$FES=(Si-Sj)-\beta(Sk-Sl)$$

This non-zero value is the offset of the focus error signal FES. It has been known that this error can be adjusted by rotating the second polarizing hologram element 12.

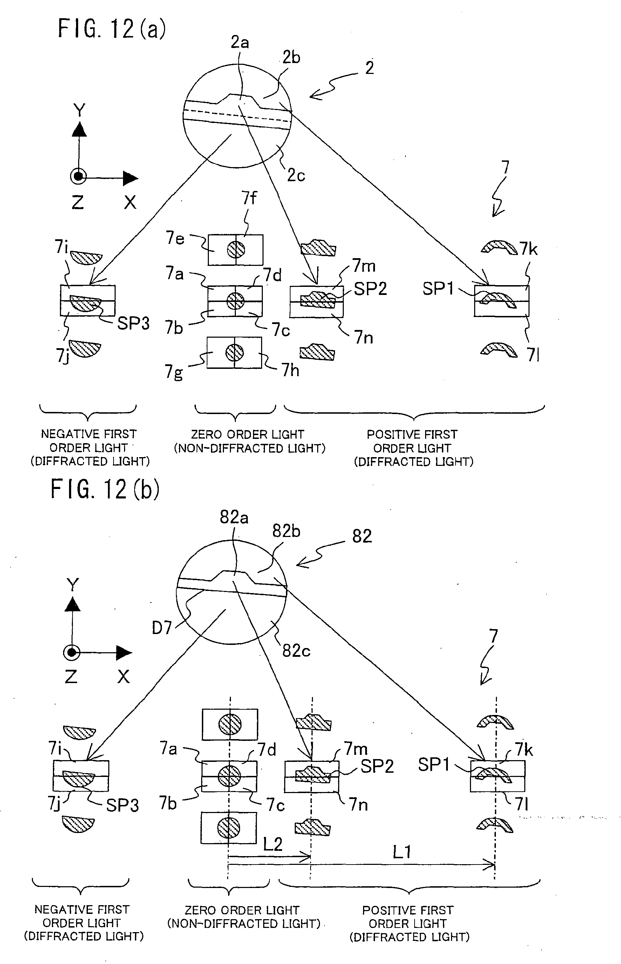

Fig. 12(b) relates to a comparative example and illustrates rotational adjustment in the first polarizing hologram element 82, when the first polarizing hologram element 2 is shaped so that the dividing straight line D7 is identical with the optical axis (i.e. the distance h3 between the straight line D1 including the optical axis and the dividing straight line D7 is 0).

The first polarizing hologram element 82 is rotated so that the focal spots SP1, SP2, and SP3 rotate around the focal spot of the non-diffracted light (zeroth-order diffracted light) 14. Since the focal spots SP1 and SP2 are opposite to the focal spot SP3 with respect to the center of rotation, the Y component of the moving distance of the focal spots SP1 is opposite to the Y component of the moving distance of the focal spot SP3. With this, the first output signal (Sk-Sl) and the third output signal (Si-Sj) change in an opposite manner, and hence there is a degree of rotation at which the focus error signal FES is null.

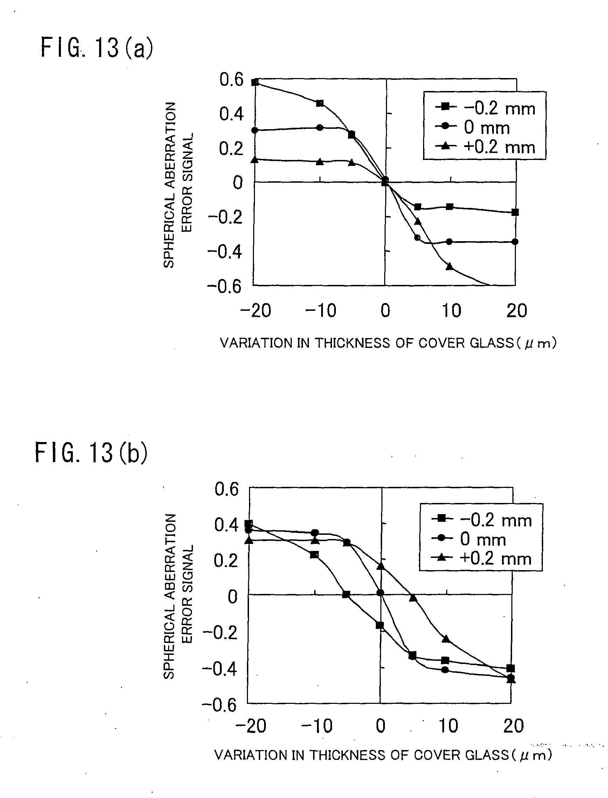

However, even if the focus error signal FES is adjusted to 0, the spherical aberration error signal SAES is not concurrently nulled and hence offset occurs. Fig. 13(b) shows the spherical aberration error signal SAES when the first polarizing hologram element 82 with the hologram element shape shown in Fig. 12(b) is adopted and there is a change in the thickness of the cover glass 6a. In the figure, the horizontal axis indicates a change in the thickness of the cover glass 6a, whereas the vertical axis indicates the spherical aberration error signal SAES after the rotational adjustment. The figure also shows the spherical aberration error signals SAES when the first polarizing hologram element 82 and the optical detector 7 are deviated from one another by 0.2mm in the optical axis direction and rotational adjustment is performed to deal with the deviation. The graph of +0.2mm indicates that the distance between the first polarizing hologram element 82 and the optical detector 7 is increased by 0.2mm, whereas the graph of -0.2mm indicates that the distance between the first polarizing hologram element 82 and the optical detector 7 is reduced by 0.2mm. According to the figure, it is understood that, after rotational adjustment of a deviation in the optical axis direction is carried out, offset occurs in the spherical aberration error signal SAES when there is no change in the thickness of the cover glass 6a.

Why this offset occurs is discussed below.

Assume that the focal spots SP1 and SP2 for generating the spherical aberration error signal SAES are distanced from the rotation center, i.e. the optical axis OZ by L1 and L2, respectively. Provided that the degree of rotational adjustment of the first polarizing hologram element 82 is θ, the focal spot SP1 moves in the -Y direction by L1 sinθ whereas the focal spot SP2 moves in the -Y direction by L2sinθ, as a result of the rotational adjustment.

For example, if L1 > L2 as shown in Fig. 12(b), the moving distance of the focal spot SP1 is longer than that of the focal spot SP2. That is to say, in Fig. 12(b), as a result of the rotation of the first polarizing hologram element 82, the focal spot SP1 moves in a long distance and hence most of the focal spot SP1 moves from the light receiving area 7k to the light receiving area 7l. In the meanwhile, since the focal spot SP2 moves only in a short distance, most of the focal spot SP2 does not move from the light receiving area 7m to the light receiving area 7n. For this reason, the spherical aberration error signal SAES, which is a difference between the first output signal (Sk-Sl) and the second output signal (Sm-Sn), is not nulled.

This problem can be solved by increasing the apparent moving distance of the y component of the focal spot SP2, in other words, by increasing the size of a part of the focal spot SP2 which is formed on the light receiving area 7n.

Fig. 12(a) shows focal spots on the optical detector 7, when the first polarizing hologram element 2 shown in Fig. 1 is adopted. As in the case of the hologram shape shown in Fig. 1, the dividing straight line D7 is arranged to be distanced by h3(>0) from the straight line D1 including the optical axis, a deviation in the optical axis direction occurs between the second polarizing hologram element 12 and the optical detector 7, and the focal spot SP2 is formed on the light receiving area 7n after the first polarizing hologram element 2 is adjusted by rotation. In other words, the dividing straight line D7 is provided on the opposite side of the dividing straight lines D2 and D6 which are provided in a radial direction, with respect to the optical axis. With this, it is possible to remove the offsets from both the focus error signal FES and the spherical aberration error signal SAES.

Fig. 13(a) shows the spherical aberration error signal SAES in case where the hologram element shape shown in Figs. 1-12 (a) is adopted, a deviation in the optical axis direction occurs between the first polarizing hologram element 2 and the optical detector 7; and the first polarizing hologram element 2 has been adjusted by rotation. According to the figure, no offset occurs in the spherical aberration error signal SAES even after the rotational adjustment.

In Fig. 1, the distance h3 between the dividing straight line D7 and the straight line D1 which is provided in a radial direction and includes the optical axis is required to be not longer than h2. That is to say, if the distance h3 between the dividing straight line D7 and the straight line D1 which includes the optical axis is longer than the distance h2 between the straight line D1 including the optical axis and the dividing straight line D2, the absolute value of the signal sensitivity of the spherical aberration error signal SAES is insufficient and hence the reliability of the spherical aberration error signal SAES is questionable.

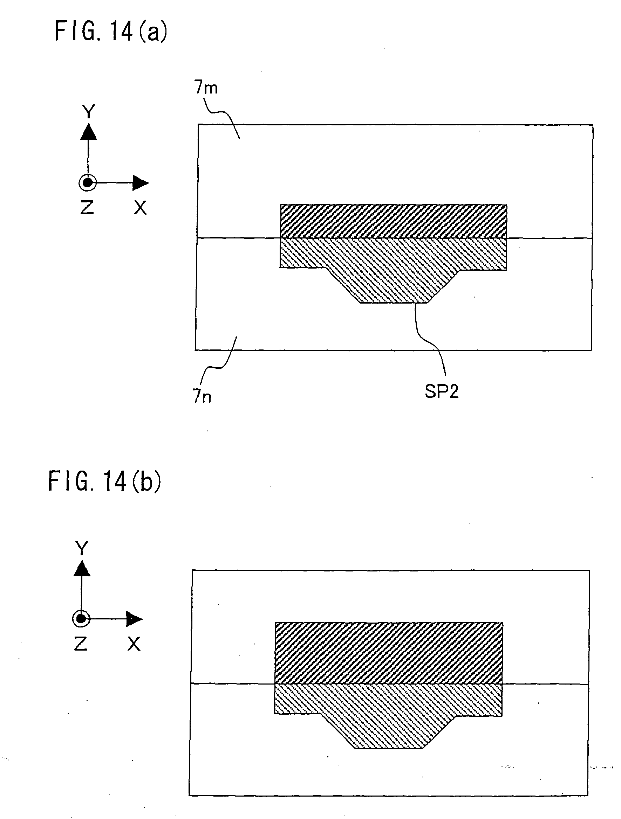

Why such a problem occurs will be discussed with reference to Fig. 14(a) and Fig. 14(b). Fig. 14(a) and Fig. 14(b) are enlarged views of the light receiving areas 7m and 7n and the focal spot SP2 in the state shown in Fig. 6. Fig. 14(a) shows a state in which [the distance h3 between the dividing straight line D7 and the straight line D1 which includes the optical axis and is provided in a radial direction] is equal to [the distance h2 between the straight line D1 including the optical axis and the dividing straight line D2]. The focal spot SP2 is formed on the border between the light receiving sections 7m and 7n. In this case, the dividing lines on the light receiving section 7m and the light receiving section 7n correspond to the straight line D1 which is provided in a radial direction and includes the optical axis. For this reason, a signal Sm generated from a focal spot on an area formed by the straight line D1 including the optical axis and is provided in a radial direction, the dividing straight lines D2 and D6, elongation of the dividing straight line D2, and circular arcs E1 and E2 is identical with a signal Sn generated from a focal spot on an area formed by the dividing straight line D7 and the circular arcs E1 and E2. On this account, these signals cancel out each other on the optical detector 7. That is to say, since the spherical aberration error signal SAES is generated only by a focal spot generated on the trapezoidal area formed by the dividing straight line D3, D4, and D5 and elongation of the dividing straight line D2, the absolute value of the spherical aberration error signal SAES is small as compared to the state of (h3<h2) shown in Fig. 1. Furthermore, as shown in Fig. 14(b), if [the distance h3 between the dividing straight line D7 and the straight line D1 which includes the optical axis and is provided in a radial direction] is longer than [the distance h2 between the straight line D1 including the optical axis and the dividing straight line D2], the signal from the trapezoidal area formed by the dividing straight line D3, D4, and D5 and elongation of the dividing straight line D2 is cancelled out by the signal from the area formed by the dividing straight lined 7 and the circular arcs E1 and E2, and hence the absolute value of the spherical aberration error signal SAES is further insufficient. It is therefore necessary to arrange [the distance h3 between the dividing straight line D7 and the straight line D1 which includes the optical axis and is provided in a radial direction] to be not longer than [the distance h2 between the straight line D1 including the optical axis and the dividing straight line D2].

As such, in the aberration detection apparatus of the present embodiment and the optical pickup apparatus 10 including the same, the aberration detection apparatus includes: a first polarizing hologram element 2 which separates a light beam 11 having passed through the objective lens 4 into a focal spot SP2 including the optical axis of the light beam 11 and focal spots SP1 and SP3 not including the optical axis of the light beam 11; and an optical detector 7 which detects spherical aberration of the objective lens 4 based on the positions of the focal spots SP2, SP1, and SP3 separated by the first polarizing hologram element 2.

The first polarizing hologram element 2 is divided into a first area 2a allowing the first light beam to pass through and second and third areas 2b and 2c allowing a second light beam not including the optical axis of the light beam to pass through. The first area 2a is circumscribed by: dividing straight lines D2 and D6 formed on the respective sides of a straight line in parallel to the dividing straight line provided in a radial direction on the optical axis; a dividing straight line D4 which is closer to the outer periphery than the dividing straight lines D2 and D6 and is in parallel to the dividing straight lines D2 and D6; dividing straight lines D3 and D5 which are formed from the ends of the dividing straight lines D2 and D6 towards the dividing straight line D4, respectively, are a pair of straight lines axisymmetric with respect to the straight line D1 which passes through the optical axis and is provided in a track direction, and form predetermined angles with respect to the straight line D1 in reverse directions; a dividing straight line D7 which is in parallel to the straight line D1 which passes through the optical axis and is provided in a radial direction, and which is formed on the opposite side of the dividing straight lines D2 and D6 with respect to the straight line D1; and circular arcs E1 and E2 of the first polarizing hologram element 2, which are formed between the dividing straight line D2 and the dividing straight line D7 and between the dividing straight line D6 and the dividing straight line D7, respectively. The second area 2b and the third area 2c are formed so as to sandwich the first area 2a which is formed around the center of the first polarizing hologram element 2.

With this arrangement, when a deviation in the optical axis direction occurs between the first polarizing hologram element 2 and the optical detector 7 and offsets therefore occur in the focus error signal FES and the spherical aberration error signal SAES, the first polarizing hologram element 2 is adjusted by rotation so that offsets in both the focus error signal FES and the spherical aberration error signal SAES are restrained.

In the present embodiment, the light beam 11 reflected on the information recording layer of the optical disc 6 is guided to the optical detector 7 by the first polarizing hologram element 2. Alternatively, the light beam 11 may be guided by a combination of a beam splitter and an wedge prism. It is noted that a hologram element is preferable in consideration of the downsizing of the apparatus.

In the present embodiment, a hologram laser in which a light source is integrated with an optical detector is adopted. Alternatively, it may be arranged so that a semiconductor laser which is an individual member is used as a light source, a light path is split by a polarizing beam splitter (PBS), and reflected light therefrom is received by an optical detector 7. In this arrangement, light beam separation means may be provided on the outgoing optical system.

In the present embodiment, a collimator lens 3 is driven as a spherical aberration correction mechanism. Alternatively, it is possible to use a mechanism which adjusts the interval between two lenses which are provided between the collimator lens 3 and the objective lens 4 and constitute a beam expander (not illustrated).

[Embodiment 2]

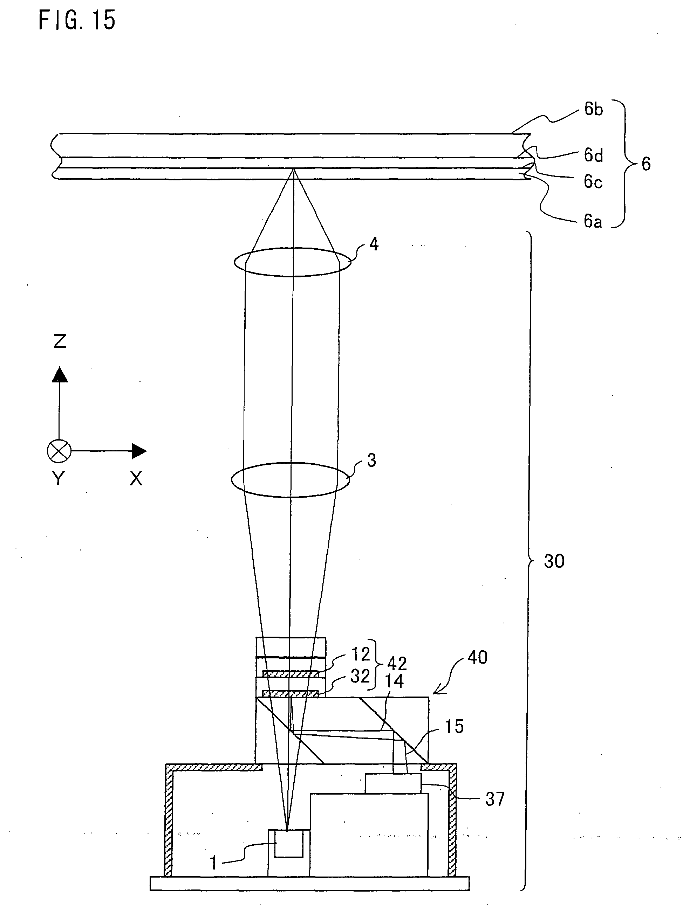

The following will describe another embodiment of the present invention with reference to Fig. 15 to Fig. 23 and Fig. 27. Except what are explained below, the arrangements of the present embodiment are identical with those in Embodiment 1. Note that members having the same functions as those described in Embodiment 1 are given the same numbers, so that the descriptions are omitted for the sake of convenience.

Being similar to Embodiment 1, an optical recording/reproduction apparatus of the present embodiment includes, as shown in Fig. 15, a spindle motor (not illustrated) which rotates an optical disc (optical recording medium) 6, an optical pickup apparatus 30 which records information onto and reproduces information from the optical disc 6, and a drive control section and a control signal generation circuit (both not illustrated) which control and drive the spindle motor and the optical pickup apparatus 30.

The optical pickup apparatus 30 includes a semiconductor laser (light source) 1 by which the optical disc 6 is irradiated with a light beam, a first polarizing hologram element (light beam separation means) 32, a collimator lens 3, an objective lens (condensing optical system) 4, and an optical detector (aberration detection means) 37.

A light beam reflected on the information recording layer 6c or the information recording layer 6d of the optical disc 6 passes through the objective lens 4 and the collimator lens 3 in this order and enters the first polarizing hologram element 32. The light beam is diffracted by the first polarizing hologram element 32 and condensed on the optical detector 37.

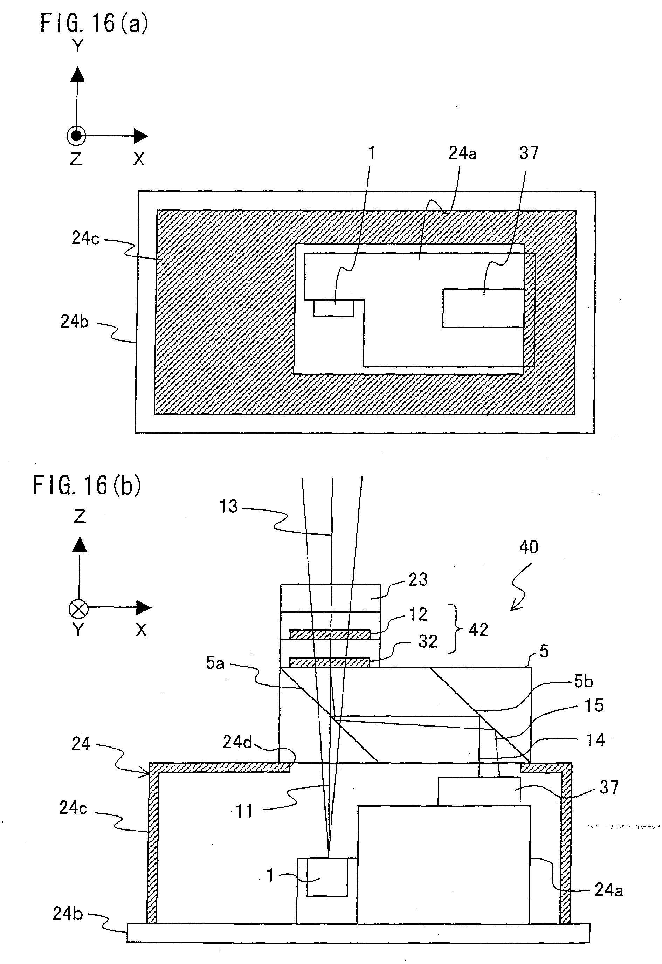

Fig. 16(a) and Fig. 16(b) show an optical integration unit 40. Fig. 16(b) is a side view in the y direction with respect to the optical axis direction (z direction) shown in Fig 16(a). This optical integration unit 40 is different from the optical integration unit 20 of Embodiment 1 in that, instead of the first polarizing hologram element 2 and the optical detector 7, a first polarizing hologram element 32 and an optical detector 37 are provided. Details of the first polarizing hologram element 32 will be given later.

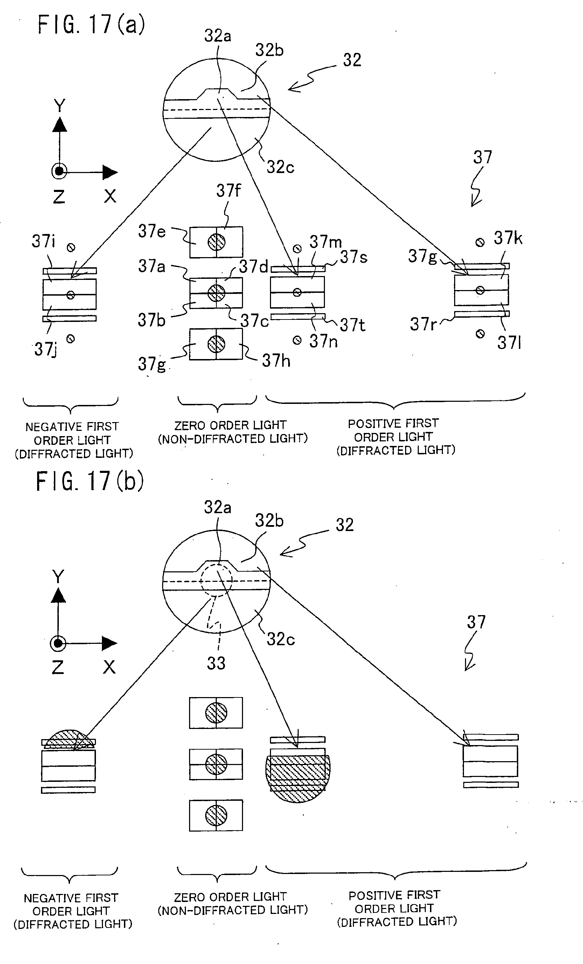

The optical detector 37 having auxiliary light receiving areas will be explained with reference to Fig. 17(a) and Fig. 17(b).

As shown in Fig. 17(a), the optical detector 37 has light receiving areas 37a-37n and auxiliary light receiving areas 37o-37t, which are similar to the light receiving sections 7a-7n of the optical detector 7 of Embodiment 1. Output signals from the light receiving areas 37a-37t are termed Sa-St.

A focus error signal FES is detected by the double knife edge method. That is to say, the focus error signal FES is figured out by the following equation:

$$FES=(Si+Sp-Sj-So)-\beta(Sk+Sr-Sl-Sq)$$

In the equation, $\beta$ is a coefficient optimum to cancel offset caused by a difference between light amounts of two spots.

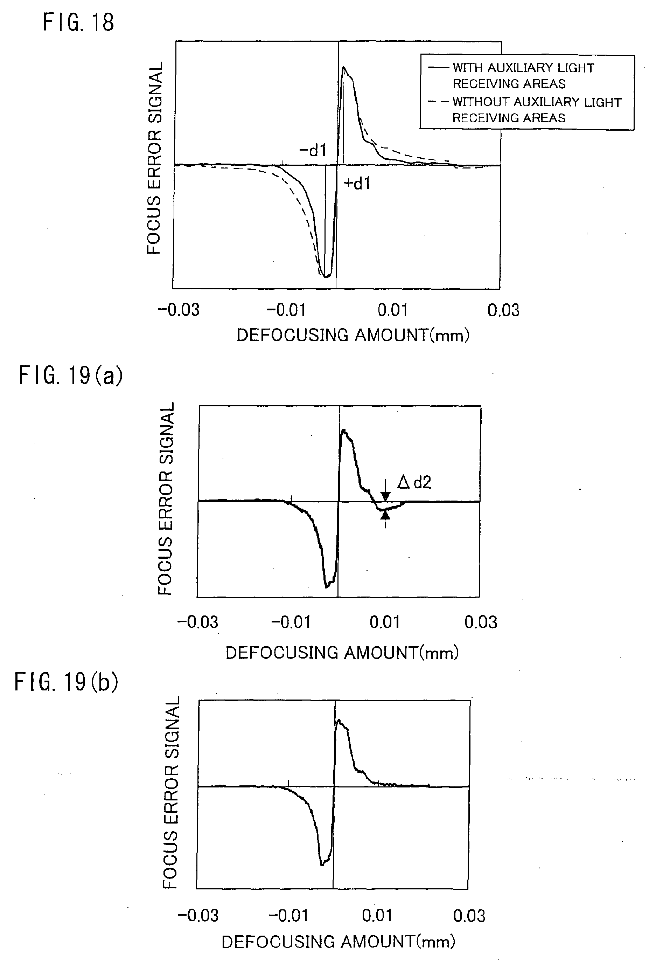

Fig. 18 shows focus error signal FES curves. In the figure, the solid line indicates a focus error signal FES curve when auxiliary light receiving areas 37o-37t are provided, whereas the dotted line indicates a focus error signal FES curve when the auxiliary light receiving areas 37o-37t are not provided. In the focus error signal FES dragging range -d1 to +d1, a signal rapidly converges to 0 outside the range when the auxiliary light receiving areas are provided, as compared to a case where the areas are not provided. With this, two (two-layer) focus error signal FES curves which are independent from one another and having sufficiently small focus error signal FES offsets are obtained, and hence focus servo is properly carried out.

However, if the optical detector 37 including the auxiliary light receiving areas 37o-37t and the first polarizing hologram element 2 which is described in Embodiment 1 and is shown in Fig. 1 are concurrently used, offset of $\Delta d2$ occurs as shown in Fig. 19(a). The state of the focal spot with a defocusing amount at the time of the offset of $\Delta d2$ is shown in Fig. 17(b). In Fig. 17(b), a circular arc 33 indicates the effective diameter of the light beam on the first polarizing hologram element 32, with the defocusing amount at the time of the offset of $\Delta d2$. With this defocusing state, the focal spot SP3 is formed only on the auxiliary light receiving area 37o. The following equation therefore holds true:

$$FES = -So$$

As a result, the offset $\Delta d2$ occurs in the focus error signal FES.

To remove this offset $\Delta d2$, it is necessary to condense light on the light receiving area 37i. The first polarizing hologram element 32 by which such condensation is achieved will be explained next.

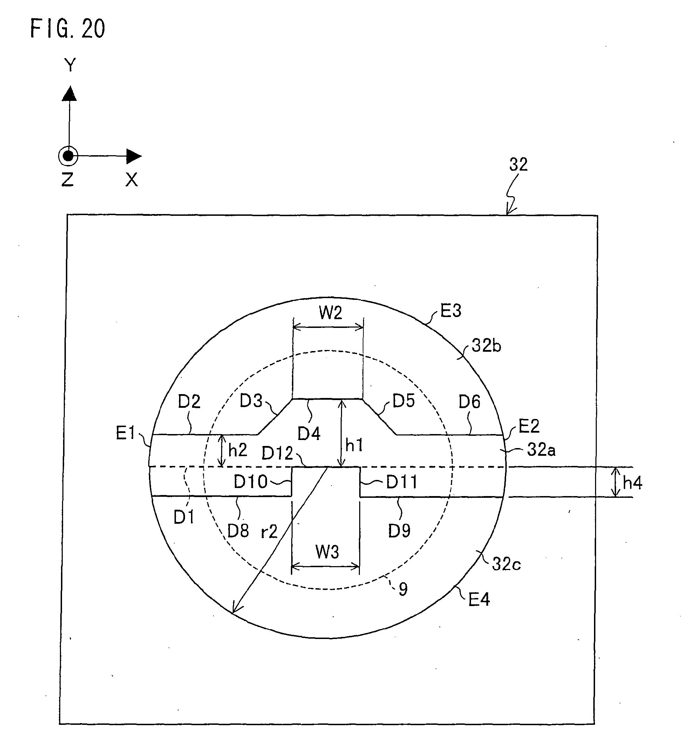

As shown in Fig. 20, the first polarizing hologram element 32 is divided into the following three areas: a first area 32a, a second area 32b, and a third area 32c.

The first area 32a is circumscribed by: dividing straight lines D2 and D6 in parallel to the dividing straight line D1 which includes the optical axis and is provided in a radial direction (D2 and D6 are distanced by h2 from the straight line D1); a dividing straight line D4 which is in parallel to the dividing straight line D1 (D4 is distanced by h1 from the straight line D1 and is w2 in length); dividing straight lines D3 and D5 which are axisymmetric with respect to a straight line in a track direction and are tilted for predetermined angles ($\pm\theta$), respectively; dividing straight line s D8 and D9 which are in parallel to the straight line D1 (D8 and D9 are distanced by h4 from the straight line D1); dividing straight lines D10 and D11 in a track direction; a dividing straight line D12 in a radial direction; and circular arcs E1 and E2 (which are r2 in radius) centered on the optical axis.

In other words, around the center of the dividing straight line D7 of Embodiment 1, the first area 32a has a rectangular notch with a dividing straight line D12 which is in parallel to the straight line D1 which passes through the optical axis and is provided in a radial direction.

The second area 32b is circumscribed by the dividing straight lines D2-D6 and a circular arc E3 (r2 in radius) centered on the optical axis. The third area 32c is circumscribed by: a circular arc E4 (r2 in radius) centered on the optical axis; dividing straight lines D8 and D9 in parallel to the straight line D1 including the optical axis and provided in a radial direction (D8 and D9 are distanced by h4 from the straight line D1); dividing straight lines D10 and D1provided in a track direction; and a dividing straight line D12 provided in a radial direction. The dividing straight line D12 includes the optical axis. The aforesaid dividing lines are all orthogonal to the optical axis.

A spot where the light beam 11 having passed through the second area 32 is condensed on the optical detector 37 is termed SP1, a spot where the light beam 11 having passed through the first area 32a is condensed on the optical detector 37 is termed SP2, and a spot where the light beam 11 having passed through the third area 32c is condensed on the optical detector 37 is termed SP3. Provided that the radius of the effective diameter of the light beam 11 on the first polarizing hologram element 32, which diameter is determined by the aperture of the objective lens 4, is indicated as r, the distance h1 from the straight line D1 including the optical axis and provided in a radial direction is 0.6r, the distance h2 from the straight line D1 is 0.3r, the distance h4 from the straight line D1 is 0.21r, $\theta=\pm45$deg, the length w2 of the dividing straight line D4 is 0.6r, and the length w3 of the dividing straight line D12 is 0.6r. The radius r2 is arranged to be sufficiently longer than the radius r, in consideration of objective lens shift and adjustment error.

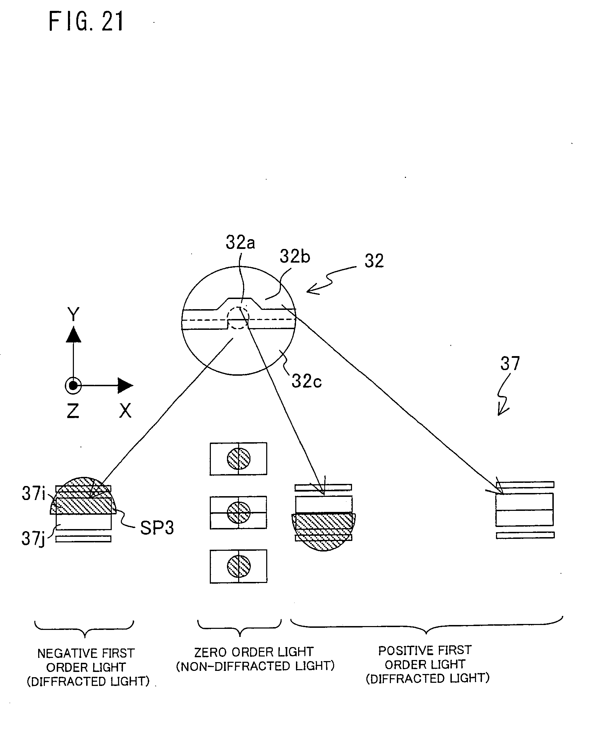

Fig. 21 shows a state where a light beam 11 has passed through the first polarizing hologram element 32 and is condensed on the optical detector 37, with the defocusing amount at the time of offset $\Delta d2$. Since a rectangular area formed by the dividing straight lines D10-D12 is provided around the center of the first area 32a, the focal spot SP3 is formed on the light receiving area 37i. Therefore, the following equation holds true:

$$FES = Si - So$$

On this account, the offset $\Delta d2$ of the focus error signal FES is reduced. Fig. 19(b) shows the focus error signal FES curve in this case. The figure shows that the offset Δd2 is reduced.

As the distance between the dividing straight line D12 and the optical axis OZ is reduced, an amount of light beam condensed on the light receiving area 37i increases and the offset Δd2 is decreased.

In addition to the above, when the shortest distance between the dividing straight line D12 and the optical axis OZ is 0 as in the case of the aforesaid first polarizing hologram element 32, i.e. when the dividing straight line D12 includes the optical axis OZ, as shown in Fig. 21, the dividing line of the focal spot SP3 corresponds to the dividing line of the light receiving areas 37i and 37j. This makes it possible to steadily perform focal point deviation detection by carrying out the knife edge method in the defocused state. It is therefore preferable that the dividing straight line D12 include the optical axis.

Fig. 27 shows a spot formed on the optical detector 37 by redundant reflected light M traveling from a non-reproduction layer of a multilayer disc. The redundant reflected light M has a circular shape which is centered on the optical axis and R in radius, and is condensed on the optical detector 37. Light receiving sections 37k, 37l, 37g, and 37r are positioned so as not to allow the redundant reflected light M to be condensed thereon, i.e. the shortest distances from the optical axis to the light receiving sections 37k and 37l are arranged to be longer than the radius R of the redundant reflected light M.

The light receiving sections 37k, 37l, 37g, and 37r are positioned so as not to allow the redundant reflected light M to be condensed thereon. A spherical aberration error signal SAES4 can be generated from signals supplied from the light receiving sections 37k, 37l, 37g, and 37r which are not influenced by the redundant reflected light M.

$$SAES4 = (Sk + Sr) - (Sl + Sg)$$

Using this equation, it is possible to generate the spherical aberration error signal SAES4 which is free from the influence of the redundant reflected light M traveling from a non-reproduction layer of a multilayer disc.

Now, assume that spherical aberration occurs while a focal point deviation remains in the optical system of the optical pickup apparatus 10. Being similar to the spherical aberration error signal SAES2 of Embodiment 1, the spherical aberration error signal SAES4 has a problem such that the spherical aberration error signal SAES4 is changed by a focal point deviation and hence spherical aberration cannot be precisely detected.

To restrain the influence of a focal point deviation, a spherical aberration error signal SAES5 is generated by the following equation, by using the focus error signal FES:

$$SAES5 = \{(Sk + Sr) - (Sl + Sg)\} - \delta \times FES$$

In the equation, the constant δ is set so that a change in the spherical aberration error signal SAES5 is small even if a focal point deviation occurs. If offset occurs in (Sk+Sr)-(Sl+Sg) on account of a focal point deviation at the time of spherical aberration, it is possible to reduce the offset by increasing or decreasing the focus error signal FES. With this, it is possible to precisely detect a spherical aberration error, even if both spherical aberration and focal point deviation occur.

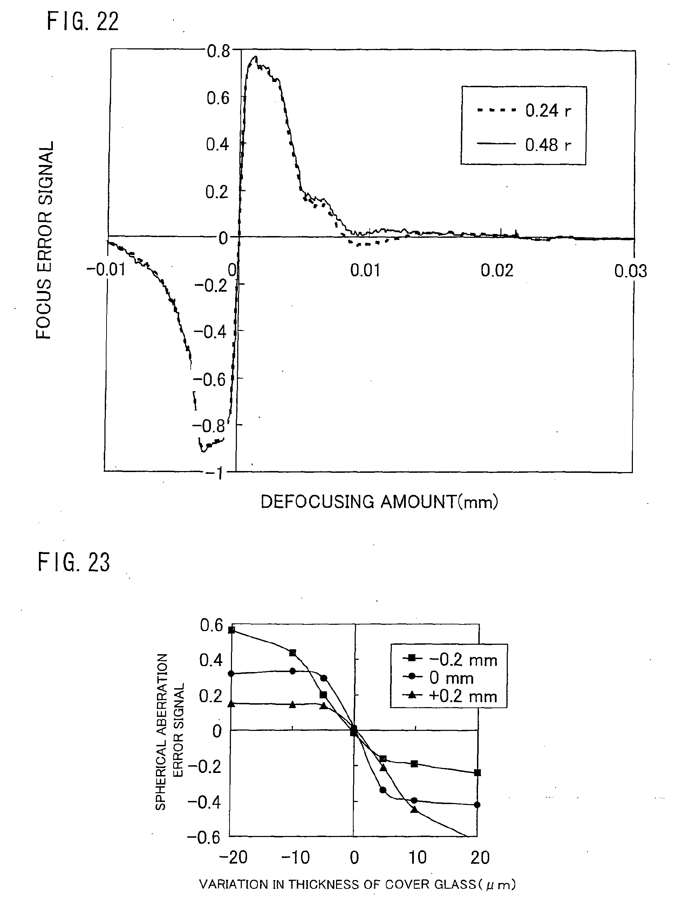

Fig. 22 shows focus error signal FES curves with different lengths of the dividing straight line D12. Provided that the radius of the effective diameter of the light beam 11 on the first polarizing hologram element 32, which diameter is determined by the aperture of the objective lens 4, is indicated as r, the solid line indicates the focus error signal FES curve when the length w3 of the dividing straight line D12 is 0.48r, whereas the dotted line indicates the focus error signal FES curve when the length w3 of the dividing straight line D12 is 0.24r. According to the figure, it is understood that offset occurs in the focus error signal FES curve when the length w3 of the dividing straight line D12 is shorter than 0.48r. The length w3 of the dividing straight line D12 is therefore preferably not shorter than 0.48r.

As discussed above, a dividing straight line is provided on the opposite side of the dividing straight lines D2 and D6 which are provided in a radial direction, with respect to the optical axis OZ. This decreases offset in the spherical aberration error signal SAES, which is caused in such a manner that the first polarizing hologram element 32 is adjusted by rotation in order to cancel a deviation in the optical axis direction between the first polarizing hologram element 32 and the optical detector 37. To achieve a similar effect in the first polarizing hologram element 32 of the present embodiment, straight lines D8 and D9 are provided in a radial direction.

However, as compared to the first polarizing hologram element 2 of Embodiment 1, in the first polarizing hologram element 32 of the present embodiment, a light amount of the focal spot SP2 formed on the light receiving area 37n is small after rotational adjustment of the first polarizing hologram element 32, because the rectangular area constituted by the dividing straight lines D10, D11, and D12 is provided. Offset therefore occurs in the spherical aberration error signal SAES.

To solve this problem, the distance h4 between the dividing straight lines in a radial direction and the optical axis OZ is arranged to be longer than the distance h3 between the dividing straight line D7 and the optical axis OZ in Embodiment 1. This makes it possible to reduce offset in the spherical aberration error signal SAES, which is caused in such a manner that a deviation in the optical axis direction occurs between the first polarizing hologram element 32 and the optical detector 37 and the first polarizing hologram element 32 is adjusted by rotation to cancel the deviation. In doing so, in the first polarizing hologram element 32, the effect similar to that of the first polarizing hologram element 2 is maximally achieved by determining the distance h4 from the optical axis OZ in such a way that the area formed by the straight line D1, the dividing straight line D7, and the circular arcs E1 and E2 of the first polarizing hologram element 2 of Embodiment 1 is equal to the area formed by the straight line D1, the dividing straight lines D8, D9, D11, and D12, and the circular arcs E1 and E2 of the first polarizing hologram element 32 of the present embodiment.

Fig. 23 shows the spherical aberration error signal SAES in case where the distance h4 between the dividing straight line and the optical axis OZ is determined in accordance with the aforesaid conditions (i.e. the distance h4 from the optical axis h4 is 0.21r), the hologram element shape shown in Fig. 20 is adopted, and a change in the thickness of the cover glass has occurred. The horizontal axis indicates a change in the thickness of the cover glass 6a, whereas the vertical axis indicates the spherical aberration error signal SAES after rotational adjustment. The figure also shows the spherical aberration error signals SAES when a deviation of 0.2mm with the second polarizing hologram element 12 occurs in the axis direction and rotational adjustment is carried out to cancel the deviation. The graph of +0.2mm indicates a case where the second polarizing hologram element 12 is detached from the optical detector 37 by 0.2mm, whereas the graph of -0.2mm indicates that a gap between the first polarizing hologram element 32 and the optical detector 7 is narrowed by 0.2mm. According to the figure, it is confirmed that no offset occurs in the spherical aberration error signal SAES even after the rotational adjustment.

In addition to the above, it is possible to obtain the following effects, as in the case of Embodiment 1: (i) even if tracking control is performed, spherical aberration is always detected in a precise manner and corrected; and (ii) it is possible to reduce a difference in the degree of adjustment between the focal point deviation signal and the spherical aberration error signal, which deviation occurs when a deviation in the optical axis direction between the light beam separation means and the optical detector is adjusted by rotating the light beam separation means.

As described above, the aberration detection apparatus of the present invention may be arranged such that, the first area has a rectangular notch which is provided around a central part of the sixth dividing straight line and includes a seventh dividing straight line which is in parallel to the straight line which passes through the optical axis and is provided in the radial direction.

This makes it possible to reduce the offset in the focal point deviation signal, because the focal spot is formed on the light receiving area.

The aberration detection apparatus of the present invention may be arranged such that, the shortest distance between the straight line which passes through the optical axis and is provided in the radial direction and the sixth dividing straight line is not longer than 30% of the radius of the light beam, e.g. of the effective diameter of the light beam determined by the aperture of the objective lens, on the light beam separation means.

This makes it possible to restrain the decrease in the sensitivity of the spherical aberration error signal.

Furthermore, when a positional deviation between the light beam separation means and the light beam occurs, signals from the respective areas are changed both in a case of positional deviation in the track direction and in a case of positional deviation in the radial direction. It is therefore possible to align the light beam separation means with the optical axis.

As a result, since a division pattern for alignment is unnecessary, a focus point deviation signal can be detected by the double knife edge method from the entire area of the light beam. This makes it possible to stably perform focus control.

The aberration detection apparatus of the present invention may be arranged such that, the shortest distance between (i) the first and second dividing straight lines and (ii) the straight line which passes through the optical axis and is provided in the radial direction is not shorter than 30% of the radius of the light beam on the light beam separation means, and the shortest distance between the third dividing straight line and the straight line which passes through the optical axis and is provided in the radial direction is not longer than 60% of the radius of the light beam on the light beam separation means.

According to this arrangement, (i) the shortest distance between the first and second dividing straight lines and the straight line which passes through the optical axis and provided in the radial direction and (ii) the shortest distance between the second dividing straight line and the straight line which passes through the optical axis and is provided in the radial direction are set at 30% and 60% of the effective diameter of the light beam, which is determined by the aperture of the objective lens on the light beam separation means. This makes it possible to improve the sensitivity in the detection of the spherical aberration error signal.

The aberration detection apparatus of the present invention may be arranged such that, the symmetrical angles formed by the fourth and fifth dividing straight lines with respect to the first and second dividing straight lines are substantially 45°.

Since the angles of the forth and fifth dividing straight lines are substantially set at 45°, the sensitivity in the detection of the spherical aberration error signal is maximized.

The aberration detection apparatus of the present invention may be arranged such that, the length of the seventh dividing straight line is not shorter than 48% of the radius of the light beam on the light beam separation means.

This makes it possible to detect a focal point deviation signal without offset, in an optical pickup apparatus using an optical detector having auxiliary light receiving area.

The aberration detection apparatus of the present invention may be arranged such that, the seventh dividing straight line is arranged to pass through the optical axis.

This makes it possible to obtain the focal point deviation signal with higher accuracy.

The aberration detection apparatus of the present invention may be arranged such that, the shortest distance between the sixth dividing straight line and the straight line which passes through the optical axis and is provided in the radial direction is arranged so as to equalize, between (i) a case where the rectangular notch is not provided and (ii) a case where the rectangular notch is provided, (i) the size of an area in the first area, which is circumscribed by the straight line which passes through the optical axis and is provided in the radial direction, the sixth dividing straight line, and the outer periphery of the light beam separation means, with (ii) the size of an area which is figured out by excluding the size of the rectangular notch from the area of (i).

This makes it possible to reduce a deviation between the degree of adjustment of the focal point deviation signal and the degree of adjustment of the spherical aberration deviation detection signal, when a deviation in the optical axis direction between the light beam separation means and the spherical aberration detection means is adjusted by rotating the light beam separation means.

The optical pickup apparatus of the present invention may be arranged such that, the first area has a rectangular notch which is provided around a central part of the sixth dividing straight line and includes a seventh dividing straight line which is in parallel to the straight line which passes through the optical axis and is provided in the radial direction.

This makes it possible to reduce the offset in the focal point deviation signal, because the focal spot is formed on the light receiving area.

The aberration detection apparatus of the present invention may be arranged such that, the spherical aberration detection means generates the spherical aberration error signal based on the signal indicating the position of the focal spot formed by the second light beam and a focal point error signal whose signal amount has been adjusted.

This makes it possible to detect a spherical aberration error signal while maximally restraining an influence of focal point deviation when spherical aberration and a focal point deviation concurrently occur, and hence the spherical aberration error signal is precisely detected. It is therefore possible to provide highly-reliable aberration detection apparatus and optical pickup apparatus.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

INDUSTRIAL APPLICABILITY

The present invention may be used for an aberration detection apparatus for detecting aberration in a condensing optical system, and for an optical pickup apparatus.

**Claims**

1. An aberration detection apparatus comprising:

   light beam separation means for separating a light beam having passed through a condensing optical system into a first light beam including an optical axis of the light beam and a second light beam excluding the optical axis of the light beam; and
   spherical aberration detection means for detecting spherical aberration in the condensing optical system, based on focal points of the first and second light beams separated by the light beam separation means,
   the aberration detection apparatus being **characterized in that**,
   the light beam separation means is divided into a first area allowing the first light beam to pass through and a second area allowing the second light beam to pass through,
   the first area is circumscribed by:

a first dividing straight line and a second dividing straight line which are provided on respective ends of a straight line which is in parallel to a straight line which passes through the optical axis and is provided in a radial direction;

a third dividing straight line which is closer to the outer periphery than the first dividing straight line and the second dividing straight line and is in parallel to the first dividing straight line and the second dividing straight line;

a fourth dividing straight line and a fifth dividing straight line which connect the ends of the first dividing straight line and the second dividing straight line with the third dividing straight line, respectively, are axisymmetrical with respect to a straight line which passes through the optical axis and is provided in a track direction, and form predetermined angles converging in a direction away from the first and second dividing straight lines;

a sixth dividing straight line which is provided on the opposite side of the first dividing straight line and the second dividing straight line with respect to the straight line which passes through the optical axis and is provided in the radial direction, and is in parallel to the straight line which passes through the optical axis and is provided in the radial direction; and

a part of the outer periphery of the light beam separation means, the part connecting the first dividing straight line with the sixth dividing straight line, and a part of the outer periphery of the light beam separation means, the part connecting the second dividing straight line with the sixth dividing straight line, and

the second area is constituted by two areas provided on the both sides of the first area provided around the center of the light beam separation means.

2. The aberration detection apparatus as defined in claim 1,
wherein, the first area has a rectangular notch which is provided around a central part of the sixth dividing straight line and includes a seventh dividing straight line which is in parallel to the straight line which passes through the optical axis and is provided in the radial direction.

3. The aberration detection apparatus as defined in claim 1,
wherein, the shortest distance between the straight line which passes through the optical axis and is provided in the radial direction and the sixth dividing straight line is not longer than 30% of the radius of the light beam on the light beam separation means.

4. The aberration detection apparatus as defined in claim 1,
wherein, the shortest distance between (i) the first and second dividing straight lines and (ii) the straight line which passes through the optical axis and is provided in the radial direction is not shorter than 30% of the radius of the light beam on the light beam separation means, and
the shortest distance between the third dividing straight line and the straight line which passes through the optical axis and is provided in the radial direction is not longer than 60% of the radius of the light beam on the light beam separation means.

5. The aberration detection apparatus as defined in claim 2,
wherein, the shortest distance between (i) the first and second dividing straight lines and (ii) the straight line which passes through the optical axis and is provided in the radial direction is not shorter than 30% of the radius of the light beam on the light beam separation means, and
the shortest distance between the third dividing straight line and the straight line which passes through the optical axis and is provided in the radial direction is not longer than 60% of the radius of the light beam on the light beam separation means.

6. The aberration detection apparatus as defined in claim 4,
wherein, the symmetrical angles formed by the fourth and fifth dividing straight lines with respect to the first and second dividing straight lines are substantially 45°.

7. The aberration detection apparatus as defined in claim 5,
wherein, the symmetrical angles formed by the fourth and fifth dividing straight lines with respect to the first and second dividing straight lines are substantially 45°.

8. The aberration detection apparatus as defined in claim 7,
wherein, the length of the seventh dividing straight line is not shorter than 48% of the radius of the light beam on the light beam separation means.

**9.** The aberration detection apparatus as defined in claim 8,
wherein, the seventh dividing straight line is arranged to pass through the optical axis.

**10.** The aberration detection apparatus as defined in claim 9,
wherein, the shortest distance between the sixth dividing straight line and the straight line which passes through the optical axis and is provided in the radial direction is arranged so as to equalize, between (i) a case where the rectangular notch is not provided and (ii) a case where the rectangular notch is provided,

(i) the size of an area in the first area, which is circumscribed by the straight line which passes through the optical axis and is provided in the radial direction, the sixth dividing straight line, and the outer periphery of the light beam separation means, with
(ii) the size of an area which is figured out by excluding the size of the rectangular notch from the area of (i).

**11.** An optical pickup apparatus, **characterized by** comprising:

a light source;
a condensing optical system which condenses a light beam emitted from the light source on an optical recording medium;
light beam separation means for separating the light beam having passed through the condensing optical system into a first light beam including an optical axis of the light beam and a second light beam excluding the optical axis of the light beam;
spherical aberration detection means for detecting spherical aberration in the condensing optical system, based on focal points of the first and second light beams separated by the light beam separation means; and
spherical aberration correction means for correcting spherical aberration detected by the spherical aberration detection means,
the light beam separation means being divided into a first area allowing the first light beam to pass through and a second area allowing the second light beam to pass through,
the first area being circumscribed by:

a first dividing straight line and a second dividing straight line which are provided on respective ends of a straight line which is in parallel to a straight line which passes through the optical axis and is provided in a radial direction;
a third dividing straight line which is closer to the outer periphery than the first dividing straight line and the second dividing straight line and is in parallel to the first dividing straight line and the second dividing straight line;
a fourth dividing straight line and a fifth dividing straight line which connects the ends of the first dividing straight line and the second dividing straight line with the third dividing straight line, respectively, are axisymmetrical with respect to a straight line which passes through the optical axis and is provided in a track direction, and symmetrically form predetermined angles converging in a direction away from the first and second dividing straight lines;
a sixth dividing straight line which is provided on the opposite side of the first dividing straight line and the second dividing straight line with respect to the straight line passing through the optical axis and provided in the radial direction, and is in parallel to the straight line passing through the optical axis and provided in the radial direction; and
a part of the outer periphery of the light beam separation means, the part connecting the first dividing straight line with the sixth dividing straight line, and a part of the outer periphery of the light beam separation means, the part connecting the second dividing straight line with the sixth dividing straight line,
the second area being constituted by two areas provided on the both sides of the first area provided around the center of the light beam separation means.

**12.** The optical pickup apparatus as defined in claim 11,
wherein, the first area has a rectangular notch which is provided around a central part of the sixth dividing straight line and includes a seventh dividing straight line which is in parallel to the straight line which passes through the optical axis and is provided in the radial direction.

**13.** An aberration detection apparatus, comprising:

separation means for separating a light beam having passed through a condensing optical system into a first light beam including an optical axis of the light beam and a second light beam farther away from the optical axis as compared to the first light beam; and

spherical aberration detection means for detecting spherical aberration in the condensing optical system, based on spots formed on detection means by the first and second light beams separated by the separation means, the aberration detection apparatus being **characterized in that**,

the shortest distance between the optical axis and the spot formed on the detection means by the second light beam is arranged to be longer than an irradiation radius of redundant reflected light generated by a non-reproduction layer of an optical recording medium having plural information recording layers, and

the spherical aberration detection means generates a spherical aberration error signal based on a signal indicating a position of a focal spot formed by the second light beam.

14. The aberration detection apparatus as defined in claim 13,

wherein, the spherical aberration detection means generates the spherical aberration error signal based on the signal indicating the position of the focal spot formed by the second light beam and a focal point deviation signal whose signal amount has been adjusted.

FIG. 1

FIG. 2

FIG. 3 (a)

FIG. 3 (b)

FIG. 4

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 5

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

# FIG. 6

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 7 (a)

SPHERICAL ABERRATION ERROR SIGNAL

Legend:
- 0 μm
- 300 μm

VARIATION IN THICKNESS OF COVER GLASS ( μ m)

FIG. 7 (b)

SPHERICAL ABERRATION ERROR SIGNAL

Legend:
- 0 μm
- 300 μm

VARIATION IN THICKNESS OF COVER GLASS ( μ m)

FIG. 8 (a)

VARIATION IN THICKNESS OF COVER GLASS($\mu$m)

FIG. 8 (b)

$h_1$=0.8r

VARIATION IN THICKNESS OF COVER GLASS($\mu$m)

FIG. 9

VARIATION IN THICKNESS OF COVER GLASS($\mu$m)

30

FIG. 10(a)

SPHERICAL ABERRATION ERROR SIGNAL

- ● l1=0.4r
- □ l1=0.6r
- △ l1=0.8r

VARIATION IN THICKNESS OF COVER GLASS(μm)

FIG. 10(b)

SPHERICAL ABERRATION ERROR SIGNAL

- ▲ 0 μm
- △ 300 μm

W1=0.8r

VARIATION IN THICKNESS OF COVER GLASS(μm)

FIG. 11

SPHERICAL ABERRATION ERROR SIGNAL

- ● 90deg
- □ 45deg

VARIATION IN THICKNESS OF COVER GLASS(μm)

## FIG. 12 (a)

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

## FIG. 12 (b)

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 13 (a)

FIG. 13 (b)

FIG. 14 (a)

7m

SP2

7n

FIG. 14 (b)

FIG. 15

FIG. 16 (a)

FIG. 16 (b)

# FIG. 17(a)

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

# FIG. 17(b)

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 18

FIG. 19 (a)

FIG. 19 (b)

FIG. 20

FIG. 21

32a   32b   32

Y

Z   X

37

37i

37j   SP3

32c

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 22

DEFOCUSING AMOUNT(mm)

FIG. 23

VARIATION IN THICKNESS OF COVER GLASS($\mu$ m)

FIG. 24

FIG. 25

FIG. 26

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

FIG. 27

NEGATIVE FIRST
ORDER LIGHT
(DIFFRACTED LIGHT)

ZERO ORDER LIGHT
(NON-DIFFRACTED LIGHT)

POSITIVE FIRST
ORDER LIGHT
(DIFFRACTED LIGHT)

44

## INTERNATIONAL SEARCH REPORT

| | International application No. |
|---|---|
| | PCT/JP2006/305171 |

**A. CLASSIFICATION OF SUBJECT MATTER**
*G11B7/135*(2006.01), *G11B7/09*(2006.01)

According to International Patent Classification (IPC) or to both national classification and IPC

**B. FIELDS SEARCHED**

Minimum documentation searched (classification system followed by classification symbols)
G11B7/09-7/22

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-044466 A (Victor Company Of Japan, Ltd.), 17 February, 2005 (17.02.05), Fig. 11 (Family: none) | 1-12 |
| A | JP 2003-323735 A (Ricoh Co., Ltd.), 14 November, 2003 (14.11.03), Fig. 2 & US 2003/0227859 A1 & EP 1341166 A2 | 1-12 |
| A | JP 2002-334474 A (Sharp Corp.), 22 November, 2002 (22.11.02), Fig. 2 & US 2002/0166945 A1 & CN 1385842 A | 1-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 May, 2006 (19.05.06) | 30 May, 2006 (30.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/305171

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-157771 A  (Sharp Corp.),<br>31 May, 2002 (31.05.02),<br>Par. Nos. [0085], [0089] to [0090], [0163];<br>Figs. 1 to 3, 14<br>& US 2002/0057359 A1 | 13-14 |
| Y | WO 1996/020473 A1  (Sony Corp.),<br>04 July, 1996 (04.07.96),<br>Page 12, lines 5 to 17; Figs. 4 to 5<br>& JP 3687100 B            & US 5923632 A1<br>& EP 749116 A1           & DE 69526435 D<br>& DE 69526435 T          & CN 1142276 A | 13-14 |

Form PCT/ISA/210 (continuation of second sheet) (April 2005)

## INTERNATIONAL SEARCH REPORT

International application No.

PCT/JP2006/305171

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
      (See extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable,
the                               payment of a protest fee..

                                        ☐ The additional search fees were accompanied by the applicant's protest but the applicable protest
                                        fee was not paid within the time limit specified in the invitation.

                                        ☒ No protest accompanied the payment of additional search fees.

Form PCT/ISA/210 (continuation of first sheet (2)) (April 2005)

**INTERNATIONAL SEARCH REPORT**

International application No.

PCT/JP2006/305171

Continuation of Box No.III of continuation of first sheet(2)

The "special technical feature" of the inventions of claims 1-12 relates to a matter that "the light beam separating means is divided into a first region transmitting the first light beam and a second region transmitting a second light beam and not containing the optical axis of the first light beam, the first region is defined by boundary lines, i.e., first and second dividing lines drawn at both ends of a line parallel to a line passing through the optical axis and extending radially, a third dividing line drawn outside the first and second dividing lines and parallel to the first and second dividing lines, fourth and fifth dividing lines composed of paired lines extending from the ends of the first and second dividing lines toward the third lines symmetrically with respect to a line passing through the optical axis and extending in the track direction, forming a predetermined angle, and inclined in an inverted V shape, a sixth dividing line drawn on the opposed side of the line passing through the optical axis to the first and second dividing lines and parallel to the line passing through the optical axis and extending radially, and

the periphery of the light beam separating means between the first and sixth dividing liens and between the second and sixth dividing lines, and the second region is composed of two divisions formed on both sides of the first region formed on the control side of the light beam separating means". The "special technical feature" of the inventions of claims 13-14 relates to a matter that "the shortest distance between the optical axis and the application position of the second light beam at the detecting means is set so as to be longer than the application radius of the unwanted reflected light produced from a non-reproduction layer of an optical recording medium having information recording layers, and

the spherical aberration detecting means generates a spherical aberration error signal from a signal indicating the focus position of the second light beam". Since these inventions are not in a technical relationship involving one or more of the same or corresponding special technical features, they cannot be considered to be so linked as to form a single general inventive concept.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002157771 A